**Europäisches Patentamt**

**European Patent Office**

**Office européen des brevets**

(19)

(11) Veröffentlichungsnummer: **0 444 098 B1**

# (12) EUROPÄISCHE PATENTSCHRIFT

(45) Veröffentlichungstag der Patentschrift: **20.04.94**

(51) Int. Cl.5: **F16H 61/14**, F16D 25/14

(21) Anmeldenummer: **89913001.7**

(22) Anmeldetag: **15.11.89**

(86) Internationale Anmeldenummer:
**PCT/EP89/01369**

(87) Internationale Veröffentlichungsnummer:
**WO 90/05866 (31.05.90 90/12)**

(54) **VERFAHREN ZUR REGELUNG EINER KUPPLUNG.**

(30) Priorität: **17.11.88 DE 3838908**

(43) Veröffentlichungstag der Anmeldung:
**04.09.91 Patentblatt 91/36**

(45) Bekanntmachung des Hinweises auf die
Patenterteilung:
**20.04.94 Patentblatt 94/16**

(84) Benannte Vertragsstaaten:
**DE FR GB IT SE**

(56) Entgegenhaltungen:
**EP-A- 0 153 798**
**DE-A- 3 121 749**
**FR-A- 2 483 649**
**GB-A- 2 081 413**

(73) Patentinhaber: **ZF FRIEDRICHSHAFEN Aktiengesellschaft**

**D-88038 Friedrichshafen(DE)**

(72) Erfinder: **THOMAS, Christian**
**Scheveningsebos 58**
**NL-2716 HW Zoetermeer(NL)**
Erfinder: **ROWE, Gerald**
**Hochbucherweg 66**
**D-8990 Lindau(DE)**
Erfinder: **GRUHLE, Wolf-Dieter**
**Grabenstrasse 12**
**D-7992 Tettnang(DE)**
Erfinder: **MAIER, Wolfgang**
**Schwalbenweg 4**
**D-7778 Markdorf(DE)**

EP 0 444 098 B1

## Beschreibung

Die Erfindung bezieht sich auf ein Verfahren zur Regelung einer Kupplung entsprechend den im Oberbegriff von Anspruch 1 aufgeführten Maßnahmen.

Ein Verfahren der vorgenannten Gattung ist aus der DE-PC 31 21 749 bekannt. Mittels eines geregelten Schlupfzustandes der Kupplung soll verhindert werden, daß Drehschwingungen, die von der Drehungleichförmigkeit einer die Antriebswelle antreibenden Antriebseinheit herrühren, auf die Abtriebswelle übertragen werden. In Abhängigkeit von der Drehzahl- bzw. Drehgeschwindigkeitsdifferenz der Antriebswelle, die ein Maß der Drehschwingung ist, wird an der Kupplung eine Drehzahldifferenz zwischen An- und Abtriebswelle, also ein bestimmter Schlupfzustand, eingestellt. Dabei soll die Drehzahldifferenz zwischen An- und Abtriebswelle stets einen höheren Wert annehmen als die Drehzahl- bzw. Drehgeschwindigkeitsdifferenz in der Antriebswelle. Die Realisierung eines derartigen Regelverfahrens ist relativ aufwendig, da die Beziehung Drehzahl- bzw. Drehgeschwindigkeitsdifferenz in der Antriebswelle zur Drehzahldifferenz zwischen An- und Abtriebswelle als Kennlinie im Sollwertgeber abzulegen ist. Dabei wird die Drehgeschwindigkeitsdifferenz der Antriebswelle gemessen. Weiterhin wird das Verfahren durchgeführt mittels einer Einrichtung, die eine den Betätigungsdruck in der Kupplung einstellende Ventileinheit aufweist. Bestandteile der Ventileinheit sind ein Wegeventil und ein das Wegeventil vorsteuerndes Magnetventil, welches pulsbreitenmoduliert betrieben wird. Magnetventile dieser Bauart weisen den Nachteil einer Temperaturabhängigkeit ihres Steuerdrucks auf.

Der Erfindung liegt daher die Aufgabe zugrunde, die vorgenannten Nachteile zu vermeiden und somit ein einfaches Verfahren zur Regelung einer Kupplung zu schaffen, zu dessen Durchführung es eines geringen regelungstechnischen und baulichen Aufwandes bedarf.

Diese Aufgabe wird bei einem Verfahren der vorgenannten Gattung nach den Merkmalen des kennzeichnenden Teils des Patentanspruches 1 dadurch gelöst, daß die Regeleinrichtung eine Vergleichereinheit aufweist, in welcher ein im Antriebsstrang hinter der Kupplung ermittelter Istwert der Drehgeschwindigkeitsdifferenz $\Delta\omega$ mit einem vorgegebenen festen Grenzwert verglichen wird, wobei bei Erreichen bzw. Überschreitung dieses Grenzwertes die Drehgeschwindigkeitsdifferenz $\Delta\omega$ durch Veränderung der Stellgröße der Kupplung auf den Grenzwert begrenzt wird. Dieser Grenzwert kann in Versuchsreihen für unterschiedlich ausgebildete Antriebsstränge und Kraftfahrzeuge ermittelt werden als das Maß der Drehgeschwindigkeitsdifferenz $\Delta\omega$, bei welchem im Antriebsstrang und in mit diesem verbundenen Bauteilen eine Schwingungsanregung eine Größe annimmt, bei der innerhalb des Antriebsstranges und der Bauteile Dröhn- und Rasselgeräusche gerade noch nicht auftreten. Eine Regelung nach dem erfindungsgemäßen Verfahren, bei der nurmehr das Drehgeschwindigkeitsdifferenzsignal mit dem Grenzwert verglichen wird, setzt einen geringen regelungstechnischen Aufwand voraus.

Dem Nebenanspruch 2 zufolge bezieht sich die Erfindung auf ein Verfahren zur Regelung einer Kupplung entsprechend den im Oberbegriff von Anspruch 2 aufgeführten Maßnahmen.

Die der Erfindung zugrundeliegende Aufgabe wird bei dem Verfahren des Nebenanspruches 2 nach den Merkmalen des kennzeichnenden Teils des Nebenanspruches 2 dadurch gelöst, daß einem der Regeleinrichtung zugeordneten Sollwertgeber Betriebsparameter der Brennkraftmaschine, die ursächlich sind für Drehgeschwindigkeitsdifferenzen $\Delta\omega$ im Antriebsstrang, zugeführt werden, aufgrund welcher der Sollwertgeber einen Sollwert der Drehzahldifferenz ermittelt, wobei der Sollwert und die Regelgröße einem Summierer (Vergleicher) der Regeleinrichtung zugeführt werden, daß die Drehgeschwindigkeitsdifferenz $\Delta\omega$ einem zweiten Sollwertgeber zugeführt wird, der bei Erreichen bzw. Überschreiten eines Grenzwertes der Drehgeschwindigkeitsdifferenz einen zweiten Sollwert unmittelbar dem Summierer (Vergleicher) oder dem ersten Sollwertgeber, dessen ersten Sollwert adaptiv beeinflussend, zuführt. Es ist demnach ein erster Regelkreis vorhanden, der aus dem die Differenzdrehzahl $\Delta n$ als Regelgröße ermittelnden Meßwertgeber und aus dem aus Betriebsparametern der Brennkraftmaschine einen ersten Sollwert bildenden ersten Sollwertgeber besteht. Diesem ersten Regelkreis ist ein zweiter Regelkreis überlagert, zu dem die die Drehgeschwindigkeitsdifferenzen $\Delta\omega$ ermittelnde Sensoreinrichtung und der zweite Sollwertgeber gehören. Der zweite Sollwertgeber kann den Sollwert des ersten Sollwertgebers adaptiv beeinflussen oder unmittelbar auf den Summierer (Vergleicher) im Sinne einer Erhöhung des Sollwertes wirken. Der erste Sollwertgeber gibt in Abhängigkeit von den Betriebsparametern der Brennkraftmaschine eine Differenzdrehzahl $\Delta n_{Soll}$ vor, aufgrund welcher in der Regeleinrichtung nach Vergleich mit der Regelgröße $\Delta n_{Ist}$ eine bestimmte Stellgröße an der Kupplung eingestellt wird. Der erste Sollwertgeber ist so ausgelegt, daß unter normalen Bedingungen die Differenzdrehzahl $\Delta n$ an der Kupplung ausreicht, um ein Karosseriedröhnen am Kraftfahrzeug zu verhindern.

Tritt dieses Problem und damit eine Überschreitung eines bestimmten Wertes der Drehgeschwindigkeitsdifferenz $\Delta\omega$ dennoch auf, so wird durch den zweiten Sollwertgeber der zweite Sollwert an den Summierer (Vergleicher) ausgegeben, oder der erste Sollwertgeber wird so adaptiert, daß dieser einen höheren Sollwert ausgibt. Wird vom zweiten Sollwertgeber ein zweiter Sollwert an den Summierer (Vergleicher ausgegeben), so wird dieser zweite Sollwert dem ersten Sollwert additiv überlagert.

Im anderen alternativen Fall kann der zweite Sollwertgeber den ersten Sollwertgeber so adaptieren, daß dieser einen erhöhten Sollwert ausgibt. Der erhöhte Sollwert für einen bestimmten Betriebsparameter wird vom Sollwertgeber derart erfaßt, daß dieser beim Auftreten der gleichen Betriebsparameter automatisch einen erhöhten Sollwert ausgibt. Auf diese Weise ist es möglich, zunächst einen geringeren Kupplungsschlupf einzustellen und diesen mittels des zweiten Sollwertgebers von Fall zu Fall so anzuheben, daß die Übertragung von Drehgeschwindigkeitsdifferenzen auf die Abtriebswelle auf einen Wert verringert wird, bei dem kein Karosseriedröhnen auftritt. Ebenso kann der zweite Sollwertgeber den ersten Sollwertgeber so beeinflussen oder der zweite Sollwert den ersten Sollwert so additiv überlagern, daß der Kupplungsschlupf nicht unnötig hohe Werte annimmt, wenn bei vom ersten Sollwertgeber vorgegebener Differenzdrehzahl sehr geringe Drehgeschwindigkeitsdifferenzen $\Delta\omega$ auftreten. Damit wird ein Nachteil der auf einen Grenzwert festgelegten Regelung behoben, der in der eingeschränkten Dynamik des Regelsystems begründet ist. Wird nämlich bei dieser auf einen Grenzwert festgelegten Regelung ein erhöhter Wert der Drehgeschwindigkeitsdifferenz $\Delta\omega$ erfaßt, so muß zunächst an der Kupplung die notwendige Drehzahldifferenz $\Delta n$ aufgebaut werden, um die Schwingungen dämpfen zu können. Während dieser Phase ist unter Umständen kurzzeitig ein Karosseriedröhnen am Kraftfahrzeug nicht zu vermeiden. Andererseits soll aber der Schlupfzustand nicht bereits bei einem unterhalb des Grenzwerts liegenden Wert eintreten. Aus diesem Grund weist das Regelsystem den ersten Regelkreis auf, der aufgrund von Betriebsparametern der Brennkraftmaschine nach einer Kennlinie die Differenzdrehzahl $\Delta n$ an der Kupplung verstellt. Die Dynamik des Systems kann somit erheblich verbessert werden. Der zweite Regelkreis, der dem ersten Regelkreis überlagert ist, weist dabei die auf einen Grenzwert der Drehgeschwindigkeitsdifferenz ausgelegte Regelung auf.

Weitere vorteilhafte Ausgestaltungen der erfindungsgemäßen Lösung des Anspruches 1 sind in den Unteransprüchen 3 und 4 beschrieben. Gemäß Anspruch 3 soll der Schlupf zwischen An- und Abtriebswelle auf einen Maximalwert $\Delta n_{max}$ und/oder eine maximale Schlupfdauer in Abhängigkeit von der Motorlast begrenzt sein. Auf diese Weise wird verhindert, daß aufgrund eines längeren Schlupfzustandes der Kupplung oder der Größenordnung des Schlupfes Schäden an der Kupplung auftreten. Werden derartige Bedingungen registriert, so kann gemäß Anspruch 3 bei Erreichen bzw. Überschreiten der maximalen Drehzahldifferenz und/oder der maximalen Schlupfdauer der Grenzwert um einen Korrekturwert K erhöht oder reduziert werden. Eine Reduzierung des Grenzwertes um den Korrekturwert K führt zum Öffnen der Kupplung und somit zur Unterbrechung des Schlupfzustandes, weil der Regelkreis dann nur minimalstes $\Delta\omega$ zuläßt. Dieser Zustand der Erhöhung des Grenzwertes wird erst dann wieder zurückgenommen, wenn kein die Drehzahldifferenz $\Delta n$ auslösendes Drehgeschwindigkeitssignal $\Delta\omega$ mehr vorhanden ist. Damit läßt sich auf einfache Weise die nach Anspruch 3 vorgeschlagene Schlupfdauer- und Schlupfwertbegrenzung realisieren.

Für das erfindungsgemäße Verfahren nach Nebenanspruch 2 sind vorteilhafte Ausgestaltungen in den Unteransprüchen 5 bis 20 beschrieben. Dabei kann, wie in Anspruch 5 vorgeschlagen wird, als Betriebsparameter der Brennkraftmaschine die Last ermittelt werden und unterhalb einer bestimmten Last im Zug- sowie Schubbetrieb des Kraftfahrzeuges die Stellgröße der Kupplung auf eine erhöhte Drehzahldifferenz $\Delta n$ verändert werden. Vorteilhaft ist dabei auch gemäß Anspruch 6 die Laständerungsgeschwindigkeit der Brennkraftmaschine zu ermitteln und bei Überschreiten eines Maximalwertes der Laständerungsgeschwindigkeit den Sollwert der Drehzahldifferenz $\Delta n$ von An- und Abtriebswelle bei Lastrücknahme zu erhöhen und bei Lastzunahme zu verringern oder konstant zu halten. Ziel der Regelung ist es, auch bei schnellen Motormomentänderungen den Istwert der Differenzdrehzahl an der Kupplung konstant zu halten. Bei Registrierung einer hohen Laständerungsgeschwindigkeit wird durch plötzliche Änderung des Sollwertes mittels der Vergleichereinheit die Regelabweichung $x_w$ vergrößert, so daß der Reglereingriff stärker wird und ein zu starkes Ansteigen der Differenzdrehzahl bei schneller Lastzunahme bzw. ein Schließen der Kupplung bei schneller Lastrücknahme verhindert werden kann.

Nach den Ansprüchen 7 bis 9 soll in einer Vergleichereinheit fortlaufend der Istwert der Drehzahldifferenz $\Delta n$ mit einem Sollwert verglichen werden, der einer sehr geringen Drehgeschwindigkeitsdifferenz $\Delta\omega$ entspricht. Die daraus entstehende Abweichung wird einer Regeleinrichtung zugeführt, die einen Proportionalteil und einen Integralteil aufweist, wobei der Proportionalteil in Abhängigkeit von der Motorlast veränderbar ist. Mit steigender Motorlast kann der Proportionalanteil vergrößert werden und der Integralteil bei größeren Regelabweichungen $x_w$ und/oder schneller Änderung der Motorlast dahingehend verändert werden, daß sein Eingriff verstärkt wird. Dem Anspruch 10 zufolge kann der Proportionalanteil in Abhängigkeit der Laständerungsgeschwindigkeit derart verändert werden, daß mit steigender Laständerungsgeschwindigkeit der Proportionalanteil vergrößert wird. Schließlich kann gemäß Anspruch 11 der Proportionalanteil in Abhängigkeit der Regelabweichung $x_w$ am Summierer (Vergleicher) so gebildet werden, daß mit größeren Regelabweichungen ein Faktor des Proportionalanteils vergrößert wird. Damit werden die Reglerparameter an verschiedene Betriebszustände der Regelstrecke angepaßt mit dem Ziel, bei verschiedenen Betriebszuständen die Regelabweichungen möglichst klein zu halten. Außerdem wird bei Verkleinerung der Regelabweichung $x_w$ der Gefahr des Schließens der dem hydrodynamischen Drehmomentwandler zugeordneten Kupplung dadurch vorgebeugt, daß dann der (öffnende) Reglereingriff stärker erfolgt.

Bei einer erfindungsgemäßen Ausgestaltung des Verfahrens zur Regelung soll nach Anspruch 12 jedem Wert der Last der Brennkraftmaschine in der Regeleinrichtung eine bestimmte Stellgröße zugeordnet sein. Dadurch soll erreicht werden, daß der dem Motormoment zugeordnete Druck lastabhängig eingestellt wird, ohne daß es zuvor zu einer größeren Regelabweichung kommen muß. Diese Maßnahme unterstützt das in Anspruch 8 beschriebene Regelverfahren.

In Ausgestaltung des Regelverfahrens nach Anspruch 12 soll dem Anspruch 13 zufolge die Schließkraft der Kupplung dem Wert der Last fortlaufend angepaßt werden, wobei aus gespeicherten Betriebsparametern die Tendenz einer Verschiebung der bei dem jeweiligen stationären Betriebszustand notwendigen Stellgröße für eine bestimmte Schließkraft erkannt wird, woraus die für die Adaption notwendigen Veränderungen der Zuordnung abgeleitet werden. Dadurch wird erreicht, daß der in Anspruch 9 beschriebene Vorteil stets in gleichem Maße erhalten bleibt und sich nicht durch Änderung der Zuordnungen (z. B. Reibwertänderungen) verringert.

Im Anspruch 14 wird vorgeschlagen, daß die Regelung einen zusätzlichen ersten Signalpfad aufweist, über welchen mittels eines Anpaßwertes und eines Zeitgliedes die verzögerte Steuergrößenänderung und verzögert wirksame Kupplungsschließkraftänderung bei schnellen Motorlaständerungen kompensiert werden können, wobei das Zeitglied als verzögertes Differentialglied wirkt, welches das dynamisch verzögerte Verhalten der Steuergröße (Kupplungsdruck) und der wirksamen Schließkraft simuliert. Mit dieser Maßnahme kann die regelstreckenbedingte verzögerte Umsetzung in eine Steuergröße (Kupplungsdruck) und eine entsprechende Schließkraft kompensiert werden, indem der Ausgangswert des Steuergerätes (Steuerstrom) angepaßt größere bzw. kleinere Werte annimmt als für stationäre Betriebszustände notwendig.

Bei einer weiteren Ausgestaltung dieses erfindungsgemäßen Regelungsverfahrens nach Anspruch 15 soll die Stellgröße über einen zweiten Signalpfad mit einem vorgegebenen zeitlichen Gradienten schnell abgesenkt werden, wenn die Drehzahldifferenz ihren Sollwert und eine zusätzliche, unterhalb des Sollwertes liegende Schwelle unterschreitet. Diese Funktion verhindert das Schließen der Kupplung, wenn die Drehzahldifferenz zu stark absinkt, durch schnelleres gesteuertes Druckabsenken, besonders wenn dieses schnellere Druckabsenken durch den Regler allein aus Stabilitätsgründen nicht möglich ist.

Gemäß Anspruch 16 soll ein Geberelement vorgesehen sein, das den im Zug- und Schubbetrieb über die Kupplung erfolgenden Momentenfluß erfaßt und dann, wenn kein Momentenfluß stattfindet, die Stellgröße auf Null setzt, von wo aus die Regelung wieder startet, wenn ein erneuter Momentenaufbau erfolgt. Stellt sich ein Betriebszustand ohne Momentenfluß ein, so muß der Kupplungsdruck möglichst schnell und vollständig auf Null abgesenkt werden, damit ein ungewolltes und den Komfort beeinträchtigendes Schließen der Kupplung verhindert wird. Dies kann mit der beschriebenen Maßnahme erreicht werden, ohne Rücksicht darauf, ob einzelne Signalpfade der Reglereinrichtung einen noch kurzzeitig größeren Wert der Stellgröße einstellen.

Bei einem erfindungsgemäßen Verfahren zur Regelung einer Kupplung, die innerhalb eines Antriebsstranges einer zwischen Brennkraftmaschine und Getriebe angeordneten hydrodynamischen Kupplung parallelgeschaltet ist, soll gemäß Anspruch 17 bei Unterschreitung eines ersten Temperaturgrenzwertes des Kühlwassers der Brennkraftmaschine oder des Schmieröls des Getriebes die Kupplung selbsttätig in ihren ausgerückten Zustand gesteuert werden. Dabei kann dem Anspruch 18 zufolge oberhalb des ersten Temperaturgrenzwertes ein zweiter Temperaturgrenzwert vorgesehen sein. Zwischen dem ersten unteren und dem zweiten oberen Temperaturgrenzwert wird die Drehzahldifferenz erhöht. Alternativ dazu besteht die Möglichkeit gemäß Anspruch 19, daß oberhalb des ersten Temperaturgrenzwertes ein zweiter Temperaturgrenzwert vorgesehen ist, wobei bei Überschreitung des ersten Temperaturgrenzwertes mit zunehmender Temperatur bis zum zweiten Temperaturgrenzwert nach einer definierten Kennlinie die vorgegebene Drehzahldifferenz zurückgenommen wird. Weiterhin soll gemäß Anspruch 20 von einer Steuerelektronik der Brennkraftmaschine nach dem Start für eine kurze Zeit der Regeleinrichtung eine Temperaturinformation über die Motoröltemperatur oder die Motorkühlwassertemperatur zur Verfügung stehen, wobei mit dem Temperaturwert eine zeitabhängige Kennlinie gesetzt wird, nach der eine erhöhte Drehzahldifferenz zurückgenommen wird. Unterhalb des ersten unteren Temperaturgrenzwertes ist aufgrund der hohen Motorungleichförmigkeit bei kaltem Motor und der hohen Ölviskosität eine Kupplungsregelung nicht zufriedenstellend durchzuführen. Bei höheren Betriebstemperaturen, die aber noch nicht der üblichen Betriebstemperatur entsprechen (Grenzwert 2) sind die Motorungleichförmigkeit und die Ölviskosität noch erhöht, so daß mit einem erhöhten Kupplungsschlupf komfortable Betriebszustände eingestellt werden können. Die Gefahr des Verbrennens der Kupplung besteht bei den geringen Öltemperaturen nicht.

Bei einer Vorrichtung zur Durchführung des Verfahrens, bei der die Kupplung als Reibkupplung ausgebildet ist, soll nach Anspruch 21 ein die Kupplung ein- und ausrückendes Stellglied beidseitig über Betätigungsräume mit einem von der Regeleinrichtung geregelten hydraulischen Betätigungsdruck als Stellgröße beaufschlagbar sein. Über eine derartige doppelt wirkende Betätigung der Kupplung lassen sich geregelte Schlupfzustände oder ein völliges Ausrücken problemlos einstellen. Gemäß Anspruch 22 soll jedem Betätigungsraum ein den Betätigungsdruck einstellendes Regelventil zugeordnet sein, wobei beide Regelventile über einen von der Regeleinrichtung eingestellten Vorsteuerdruck beaufschlagbar sind.

Dabei kann nach Anspruch 23 ein erstes Regelventil, das den Betätigungsdruck in einem ersten Betätigungsraum der Reibungskupplung einstellt, hydraulisch vorgesteuert sein und mittels seines Kolbenschiebers in einer ersten Endstellung bei geringem Vorsteuerdruck bzw. Vorsteuerdruck gleich Null den ersten Betätigungsraum druckbeaufschlagen und in einer zweiten Endstellung bei erhöhtem Vorsteuerdruck den ersten Betätigungsraum entleeren sowie das zweite Regelventil derart mit Vorsteuerdruck beaufschlagen und dessen Kolbenschieber verstellen, daß der zweite Betätigungsraum mit einem hydraulischen Betätigungsdruck beaufschlagt wird. Diese Reihenschaltung der beiden Regelventile innerhalb der Vorsteuerdruck führenden Leitung führt zu Verzögerungen in der Schaltung der beiden Ventile und damit zu einer Dämpfung der Schaltvorgänge der Kupplung.

Weiterhin soll gemäß Anspruch 24 ein als 3/2-Wegeventil ausgebildetes Schmierventil an das Hauptdrucksystem und an einen Entleerungsanschluß des zweiten Regelventils, der in dessen erster Stellung Druckmittel aus dem zweiten Betätigungsraum abführt, angeschlossen sein, wobei das Schmierventil in seinen beiden Schaltstellungen dem Getriebe jeweils Druckmittel aus dem Hauptdrucksystem oder dem Entleerungsanschluß zur Schmierung zuleitet. Bei gesicherter Schmiermittelversorgung des Kraftfahrzeuggetriebes kann folglich auf eine separate Schmiermittelpumpe verzichtet werden. Nach Anspruch 25 kann das Schmierventil mit dem Druck der Vorsteuerleitung vorgesteuert sein, während alternativ dazu nach Anspruch 26 das Schmierventil mit dem Druck des Entleerungsanschlusses des zweiten Wegeventils vorgesteuert ist.

In weiterer Ausgestaltung der Erfindung ist gemäß Anspruch 27 in der Vorsteuerleitung ein stromproportional wirkendes, elektromagnetisches Drucksteuerventil angeordnet. Dieses Drucksteuerventil stellt den auf die beiden Wegeventile und gegebenenfalls das Schmierventil wirkenden Vorsteuerdruck proportional zu einem elektrischen Steuerstrom ein, wobei der Steuerdruck weitgehend unabhängig von der Temperatur des Druckmittels ist. Zur Dämpfung der während der Regelvorgänge durch das Drucksteuerventil in der Vorsteuerleitung verursachten Druckschwingungen kann gemäß Anspruch 28 in der Vorsteuerleitung ein hydraulisches Dämpfungsglied angeordnet sein.

Schließlich soll gemäß Anspruch 29 die elektronische Regelung des Drucksteuerventils derart aufgebaut sein, daß zur Erfassung von Drehzahlen bzw. Drehzahldifferenzen eine mehrpolige Schlitzscheibe bzw. ein Zahnrad, das mit einem Drehzahlsensor zusammenwirkt, vorgesehen sind, wobei in einer nachgeschalteten Impulsflächenaufbereitung exakt gleiche Impulsflächen erzeugt werden, von welchen in einem nachfolgenden Bandpaßfilter Restwelligkeit und selektive Eckdaten des Drehschwingungssignals bestimmt werden und schließlich in einer nachgeschalteten Stufe eine einen direkten Bezug zur Istgröße aufweisende Ausgangsspannung erzeugt wird.

Diese Schaltung ermöglicht mit vergleichsweise geringem Aufwand Drehschwingungen, welche in frequenzmodulierter Form im Signalverlauf des Drehzahlaufnehmers enthalten sind, selektiv zu entnehmen. Entscheidend für die Funktion der Schaltung sind die Eckdaten des Bandpaßfilters. Es werden damit Effekte erzielt, welche die Qualität des Ausgangssignales maßgeblich beeinflussen. Durch geschickte Wahl der Eckfrequenzen des Bandpaßfilters kann ein diskreter Drehschwingungsanteil im Betriebsdrehzahlbereich unterdrückt oder hervorgehoben werden. Damit wird erreicht, daß auch kleinste Schwingungsamplituden, welche zu Drehschwingungserregungen und damit zu Brummen führen, als "Istwertsignal" für den Regelkreis zur Verfügung stehen. Diese Maßnahme führt auch zur Verbesserung des Signal-/Rauschverhältnisses und erlaubt insgesamt eine Schaltungsauslegung, welche den Anforderungen entsprechend temperatur- und langzeitstabil ist. Gleichzeitig wird die Signalauflösung so gesteigert, daß kleinste Drehgeschwindigkeitsdifferenzen ($\Delta\omega < 0{,}1$ rad/sec) ausgeregelt werden können.

In der Ausgangsstufe wird nicht nur eine der Drehschwingungs-Wechselamplitude proportionale Gleichspannung erzeugt.
Ein nachgeschalteter Tiefpaß bewirkt, daß z. B. Störgrößen, welche über Fahrweise und Fahrbahneinflüsse als Drehschwingung in Erscheinung treten, unterdrückt werden. Das heißt, mit beliebig schmalbandigem Bandpaßverhalten und entsprechend angepaßter Grenzfrequenz von Tiefpaß 2 kann eine diskrete Brummresonanzfrequenz frei von übrigen Störgrößen in Form einer "Istwert-Gleichspannung" dem Regelkreis zugeführt werden. Der Arbeitspunkt des Reglers kann hierbei so gelegt werden, daß mehr als 50 % der verfügbaren Signalamplitude zur Brummausregelung zur Verfügung steht.

Zur weiteren Erläuterung der Erfindung wird auf die Zeichnung verwiesen, in der Ausführungsbeispiele vereinfacht dargestellt sind. Es zeigen

Fig. 1    eine Vorrichtung zur Regelung einer Kupplung mit hydraulisch vorgesteuerten Regelventilen;

Fig. 2    eine alternative Ausgestaltung einer Vorrichtung zur Regelung einer Kupplung;

Fig. 3    ein Blockschaltbild einer ersten Ausgestaltung eines Regelkreises für eine geregelte Kupplung;

Fig. 4    ein Blockschaltbild einer zweiten Ausgestaltung eines Regelkreises für eine geregelte Kupplung;

Fig. 5    ein erweitertes Blockschaltbild für eine Regelung einer Kupplung nach Fig. 3,

Fig. 6    ein erweitertes Blockschaltbild für eine Regelung einer Kupplung nach Fig. 4 und

Fig. 7    eine schematische Darstellung einer elektronischen Einrichtung zur Ermittlung von Drehzahlen und Drehgeschwindigkeitsdifferenzen.

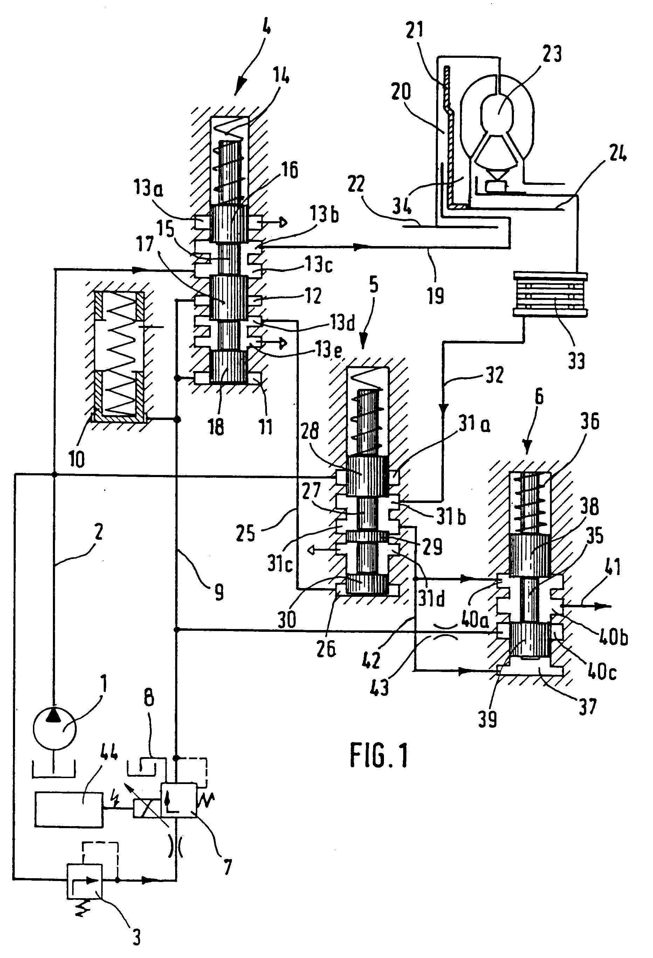

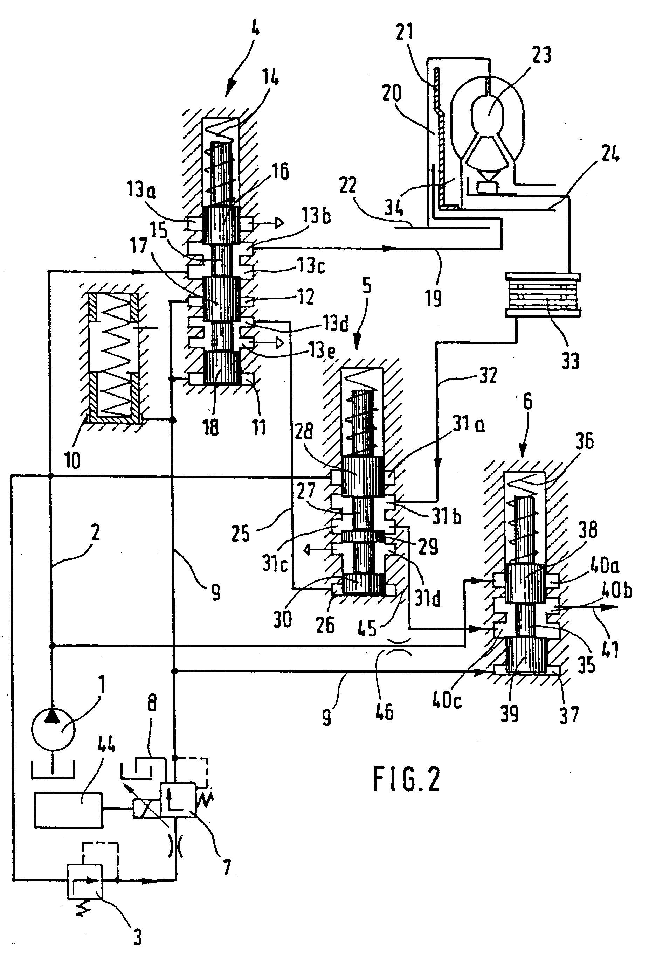

In den Fig. 1 und 2 ist mit 1 eine Hydraulikpumpe bezeichnet, die Druckmittel in eine Hauptdruckleitung 2 fördert. Die Hauptdruckleitung 2 ist angeschlossen an ein Druckreduzierventil 3, ein erstes Regelventil 4, ein zweites Regelventil 5 und ein Schmierventil 6. Dem Druckreduzierventil 3 ist ein Drucksteuerventil 7 nachgeordnet, das eine Ablaufleitung 8 zum Tank stromproportional auf- oder zusteuert. Dieses Drucksteuerventil 7 ist betätigt von einem Steuergerät 44 und beherrscht den Druck in seiner ausgangsseitigen Vorsteuerleitung 9. Diese Vorsteuerleitung 9 ist an ein Dämpfungsglied 10 sowie einen stirnseitigen Vorsteuerraum 11 und einen Steuerraum 12 des ersten Regelventils 4 angeschlossen. Darüber hinaus weist das erste Regelventil 4 fünf Ringräume 13a bis e auf, deren Zu- und Abfluß des Druckmittels von einem gegen die Kraft einer Feder 14 verlagerbaren Kolbenschieber 15 beherrscht wird, welcher Steuerkolben 16 bis 18 aufweist. Der erste Ringraum 13a ist zum Druckmittelablauf hin geöffnet, während der zweite Ringraum 13b über eine erste Betätigungsleitung 19 an einen ersten Betätigungsraum 20 einer Reibungskupplung 21 angeschlossen ist. Diese Reibungskupplung 21, dient als Wandlerüberbrückungskupplung, d. h., von einer Antriebswelle 22 aus wird über einen hydrodynamischen Drehmomentwandler 23 bei ausgerückter Reibungskupplung 21 Drehmoment auf eine Abtriebswelle 24 übertragen. Die Reibungskupplung 21 ist diesem hydrodynamischen Drehmomentwandler 23 parallel geschaltet, so daß bei völlig eingerückter Reibungskupplung 21 das gesamte Drehmoment über die Reibungskupplung 21 schlupffrei von der Antriebswelle 22 zur Abtriebswelle 24 übertragen wird.

Der Ringraum 13c des ersten Regelventils 4 ist angeschlossen an die Hauptdruckleitung 2, während eine Verbindungsleitung 25 zum Anschluß des Ringraums 13d an einen stirnseitigen Vorsteuerraum 26 des zweiten Regelventils 5 dient. Schließlich ist der Ringraum 13e zum Druckmittelablauf hin geöffnet. Das zweite Regelventil 5 weist einen Steuerschieber 27 mit Steuerkolben 28 bis 30 auf. Im Inneren des zweiten Regelventils 5 sind, abgesehen vom stirnseitigen Vorsteuerraum 26, Ringräume 31a bis 31d angeordnet. Der Ringraum 31a ist dabei angeschlossen an die Hauptdruckleitung 2, während der Ringraum 31b über eine zweite Betätigungsleitung 32, innerhalb welcher ein Kühler 33 angeordnet ist, an einen zweiten Betätigungsraum 34 der Reibungskupplung 21 angeschlossen ist. Das in den Fig. 1 und 2 dargestellte Schmierventil 6 weist einen Ventilschieber 35 auf, der stirnseitig eine Feder 36 und dieser gegenüberliegend einen Steuerraum 37 hat. Der Ventilschieber 35 ist mit Steuerkolben 38 und 39 versehen, die Ringräume 40a bis 40c beherrschen. An den Ringraum 40b ist eine Schmierölleitung 41 angeschlossen, die zu Schmierstellen des nicht näher dargestellten Kraftfahrzeuggetriebes führt.

Bei dem Ausgestaltungsbeispiel nach Fig. 1 führt von dem Ringraum 31c des zweiten Regelventils 5 eine Leitung 42 verzweigt zu dem Ringraum 40a und zum Steuerraum 37 des Schmierventils 6. Der Ringraum 40c ist unter Zwischenschaltung einer Drossel 43 an die Hauptdruckleitung 2 angeschlossen.

Die Funktion der hydraulischen Steuereinrichtung nach Fig. 1 ist folgende: Über das Druckreduzierventil 3 wird in der Vorsteuerleitung 9 ein konstanter, gegenüber dem Hauptdruck reduzierter Steuerdruck eingestellt, der nur durch die Stellung des von dem Steuergerät 44 verstellten Drucksteuerventils 7 veränderlich ist, wobei dieses stromproportional die Ablaufleitung 8 öffnet oder schließt. Ist diese Ablaufleitung 8 durch das Drucksteuerventil 7 geöffnet - wie in der Fig. 1 dargestellt -, so wirkt im stirnseitigen Vorsteuerraum 11 des Kolbenschiebers 15 ein geringer Vorsteuerdruck, und der Kolbenschieber 15 ist durch die Kraft der Feder 14 in seine unterste Stellung verschoben, in welcher die Hauptdruckleitung 2 über die Ringräume 13b und c mit der ersten Betätigungsleitung 19 verbunden ist, so daß sich im ersten Betätigungsraum 20 der Reibungskupplung 21 ein Betätigungsdruck aufbaut, der in der Richtung eines Ausrückvorgangs der Reibungskupplung 21 wirkt. Da der stirnseitige Vorsteuerraum 26 des zweiten Regelventils über die Verbindungsleitung 25 sowie Ringräume 13d und e zum Ablauf hin geöffnet ist, befindet sich dieses Ventil 5 ebenfalls in seiner unteren Stellung, in der es die zweite Betätigungsleitung 32 über Ringräume 31b und c und die Leitung 42 mit dem Steuerraum 37 des Schmierventils 6 verbindet. Der Ventilschieber 35 des Schmierventils 6 ist gegen die Kraft der Feder 36 in seine obere Position verschoben, in der das in der Leitung 42 anstehende Druckmittel über die Ringräume 40a und b dieses Ventils in die Schmierölleitung 41 gelangen kann.

Wird das Drucksteuerventil 7 über das Steuergerät 44 in eine Stellung verschoben, in welcher die Ablaufleitung 8 mehr oder weniger abgesperrt ist, so steigt der Vorsteuerdruck in der Vorsteuerleitung 9 und folglich auch im stirnseitigen Vorsteuerraum 11 des Regelventils 4 an, so daß sich dessen Kolbenschieber 15 in eine Position bewegt, in der Druckmittel aus dem ersten Betätigungsraum 20 der Reibungskupplung 21 über die Ringräume 13b und a abgeführt wird und in der vom Steuerraum 12 aus über den Ringraum 13d der Vorsteuerdruck über die Verbindungsleitung 25 ebenfalls zum stirnseitigen Vorsteuerraum 26 des zweiten Regelventils 5 gelangt. Dadurch wird mit einer Verzögerung der Steuerschieber 27 gegen Federkraft verschoben und verbindet die Hauptdruckleitung 2 unter Einbeziehung des Kühlers 33 mit dem zweiten Betätigungsraum 34, wodurch die Reibungskupplung 21 in ihre eingerückte Stellung bewegt wird. In dieser Position des zweiten Regelventils 5 wird über die Ringräume 31c und d Druckmittel aus der Leitung 42 abgeführt, so daß der Ventilschieber 35 des Schmierventils 6 durch die Feder 36 in seine untere Stellung verschoben wird. Nunmehr gelangt Druckmittel zu den Schmierstellen aus der Hauptdruckleitung 2 über die Ringräume 40b und c des Schmierventils 6. Während des erfindungsgemäßen Regelvorganges der Reibungskupplung werden Schlupfzustände mit dieser elektro-hydraulischen Steuereinrichtung eingestellt, bei welchen ein geregeltes Druckniveau in den Betätigungsräumen 20 und 34 der Reibungskupplung 21 herrscht.

Im Unterschied zur Fig. 1 wird nach Fig. 2 dem Schmierventil 6 in seinem Steuerraum 37 unmittelbar aus der Vorsteuerleitung 9 Vorsteuerdruck zugeführt. Von dem Ringraum 31c des zweiten Regelventils 5 führt eine Leitung 45 zum Ringraum 40c des Schmierventils 6. An den Ringraum 40a ist die Hauptdruckleitung 2 unmittelbar angeschlossen, wobei in diesem Zweig der Hauptdruckleitung 2 eine Drossel 46 angeordnet ist. Dabei ist die Funktion der Einrichtung nach Fig. 2 folgendermaßen: Übereinstimmend mit der Ausführung nach Fig. 1 baut sich in Abhängigkeit von den Stellungen der über den Steuerdruck in der Vorsteuerleitung 9 beherrschten Wegeventile 4 und 5 in den Betätigungsräumen 20 und 34 ein bestimmter Betätigungsdruck auf. Ist der Druck in der Vorsteuerleitung 9 relativ gering, so befindet sich der Ventilschieber 35 des Schmierventils 6 in seiner unteren Stellung, wobei den Schmierstellen Druckmittel aus dem zweiten mit dem Wandlerinnenraum verbundenen Betätigungsraum 32 zugeführt wird. Steigt der Druck in dem Steuerraum 37 des Schmierventils 6 an, so stellt der Ventilschieber 35 über die Ringräume 40a und b eine Verbindung zwischen der Hauptdruckleitung 2 und der Schmierölleitung 41 her.

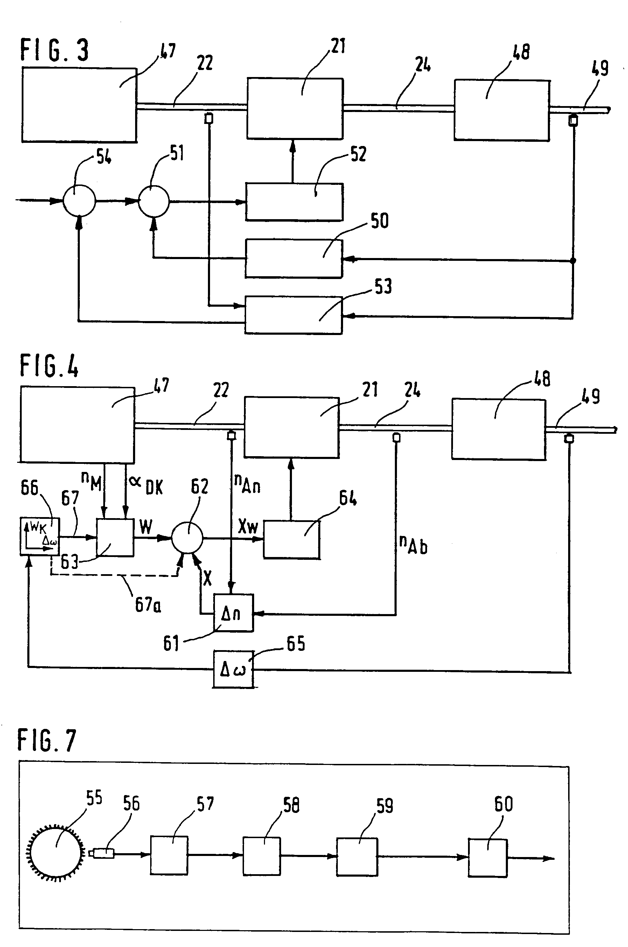

Die Fig. 3 zeigt ein Blockschaltbild einer ersten Ausführung der erfindungsgemäßen Regelung der Kupplung. Dabei ist in der schematischen Darstellung mit 47 ein Antriebsmotor (Brennkraftmaschine) des Kraftfahrzeugs bezeichnet, der über die bereits in den Fig. 1 und 2 gezeigte Antriebswelle 22 die regelbare Kupplung 21 antreibt. Abtriebsseitig führt von der Kupplung 21 die Abtriebswelle 24 zu einer Übertragungseinheit (Getriebeeinheit) 48, die beispielsweise als Kraftfahrzeuggetriebe ausgebildet sein kann. Schließlich ist aus der Übertragungseinheit 48 eine Ausgangswelle 49 herausgeführt. Eine Regelgrößenberechnungseinheit 50 ermittelt im vorliegenden Fall laufend die Drehgeschwindigkeitsdifferenz $\Delta\omega$ der Ausgangswelle 49 als Maß der Drehungleichförmigkeit. Die Drehgeschwindigkeitsdifferenz $\Delta\omega$ kann abtriebsseitig der Kupplung auch an der Abtriebswelle 24 oder Wellen bzw. Zahnrädern der Übertragungseinheit 48 erfaßt werden und wird einer Vergleichereinheit 51 als Istwert x zugeführt, wobei die Vergleichereinheit 51 aus einem vorgegebenen festen Sollwert w eine Regelabweichung $x_w$ bestimmt. Der Sollwert w repräsentiert dabei eine Größe der Drehungleichförmigkeit $\Delta\omega_{max}$ der Ausgangswelle 49 oder der Abtriebswelle 24 bzw. der Elemente der Übertragungseinheit 48, bei der diese als oberer Grenzwert noch nicht zu Geräuschen im Antriebsstrang und an Karosserieteilen führt. Mit der Regelabweichung $x_w$ bestimmt ein Regler (Regeleinrichtung) 52 nach einem bestimmten Algorithmus eine Stellgröße y (Kupplungsdruck oder Kupplungsweg), die die Kupplung 21 so schlupfen läßt, daß die Drehgeschwindigkeitsdifferenz $\Delta\omega$ mit ihrem Istwert x den vorgegebenen Sollwert (Grenzwert) nicht oder nur unwesentlich übersteigt. Zur Dämpfung der Schwingungen des Antriebsstranges genügt normalerweise ein geringer Kupplungsschlupf. Dieser wird in einer Maximalschlupf-Überwachungseinheit 53 erfaßt. Nur bei Erreichen oder Überschreiten eines vorgegebenen maximalen Schlupfes über eine längere Zeit gibt die Maximalschlupf-Überwachungseinheit 53 einen vorgegebenen Korrekturwert K aus, der den Sollwert w über eine weitere Vergleichereinheit 54 so beeinflußt, daß der Schlupf der Kupplung 21 schnell verringert wird oder die Kupplung 21 ganz öffnet. Selbstverständlich besteht die Möglichkeit, den Kupplungsschlupf $\Delta n$ auch zwischen der Antriebswelle 22 und der Abtriebswelle 24 zu ermitteln, und die Drehgeschwindigkeitsdifferenz $\Delta\omega$ kann durch Meßwertaufnehmer an der Abtriebswelle 24 oder innerhalb der Übertragungseinheit 48 erfaßt werden.

Die Fig. 4 zeigt als Blockschaltbild ein Ausgestaltungsbeispiel des Verfahrens zur Regelung einer Kupplung nach Nebenanspruch 2. In der schematischen Darstellung ist wiederum mit 47 der Antriebsmotor des Kraftfahrzeugs bezeichnet, der über die Antriebswelle 22 die regelbare Kupplung 21 antreibt. Abtriebsseitig führt von der Kupplung 21 die Abtriebswelle 24 zu der Übertragungseinheit 48, die als Kraftfahrzeuggetriebe ausgebildet ist. Aus der Übertragungseinheit 48 ist eine Ausgangswelle 49 herausgeführt. Eine Regelgrößenberechnungseinheit 61 ermittelt laufend aus den Drehzahlen der Antriebswelle 22 und der Abtriebswelle 24 eine Differenzdrehzahl $\Delta n$ und führt diese einer Vergleicher- oder Summiereinheit 62 als Istwert x zu. Einem ersten Sollwertgeber 63 werden Betriebsparameter des Antriebsmotors 47, wie z. B. die Motordrehzahl $n_M$ und die Drosselklappenstellung $\alpha_{DK}$ zugeleitet, aufgrund welcher der Sollwertgeber 63 eine bestimmte Differenzdrehzahl $\Delta n$ als Sollwert w an die Vergleicher- oder Summiereinheit 62 vorgibt. Ein Regler (Regeleinrichtung) 64 gibt aufgrund des Vergleiches von Soll- und Istwert der Differenzdrehzahl $\Delta n$ eine bestimmte Stellgröße y an die Kupplung 21 aus. Diesem Regelkreis ist ein zweiter Regelkreis überlagert, der eine Regelgrößenberechnungseinheit 65 aufweist, die zur Bestimmung der jeweiligen Drehgeschwindigkeitsdifferenz $\Delta\omega$ der Ausgangswelle 49 dient. Diese Regelgrößenberechnungseinheit 65 kann an jede beliebige Welle oder Übertragungseinrichtung abtriebsseitig der Kupplung 21 angeschlossen sein und liefert ein Maß für die Drehungleichförmigkeit. Die Drehgeschwindigkeitsdifferenz $\Delta\omega$ wird einem zweiten Sollwertgeber 66 zugeführt, der wahlweise über einen Pfad 67 auf den ersten Sollwertgeber adaptiv einwirken kann oder alternativ über einen Pfad 67a den von dem ersten Sollwertgeber 63 gelieferten ersten Sollwert an der Vergleicher- oder Summiereinheit 62 additiv überlagert.

Die Funktionsweise der Einrichtung ist wie folgt: Die Regelgrößenberechnungseinheit 61 erfaßt laufend aufgrund der An- und Abtriebsdrehzahl der Kupplung 21 die Differenzdrehzahl $\Delta n$ und führt diesen Wert x der Vergleicher- oder Summiereinheit 62 zu, die außerdem aus dem ersten Sollwertgeber 63 einen aufgrund der Betriebsparameter des Antriebsmotors 47 gebildeten Sollwert w erhält. Aufgrund dieser Betriebsparameter wird der Sollwert derart verändert, daß unter normalen Bedingungen ein Karosseriedröhnen am Kraftfahrzeug nicht auftritt. Nimmt jedoch die Drehgeschwindigkeitsdifferenz $\Delta\omega$ einen Wert an, bei dem erfahrungsgemäß Karosseriedröhnen auftritt, so gibt der zweite Sollwertgeber 66 einen zweiten Sollwert aus, wobei dieser zweite Sollwert den Sollwert w des ersten Sollwertgebers 63 so adaptiert, daß dieser einen erhöhten Sollwert ausgibt. Darüber hinaus besteht die Möglichkeit, daß der zweite Sollwert unmittelbar additiv auf die Vergleicher- oder Summiereinheit 62 wirkt. Der erste Sollwertgeber 63 erfaßt die Betriebsparameter, bei denen er vom zweiten Sollwertgeber 66 adaptiert wurde, so daß bei Wiederauftreten der gleichen Betriebsparameter $\alpha_{DK}$, $n_M$ ein erhöhter Sollwert w ausgegeben wird. Somit kann zunächst ein geringer Kupplungsschlupf $\Delta n$ eingestellt werden und dieser durch den zweiten Sollwertgeber 66 derart korrigiert werden, daß komfortable Zustände realisiert werden.

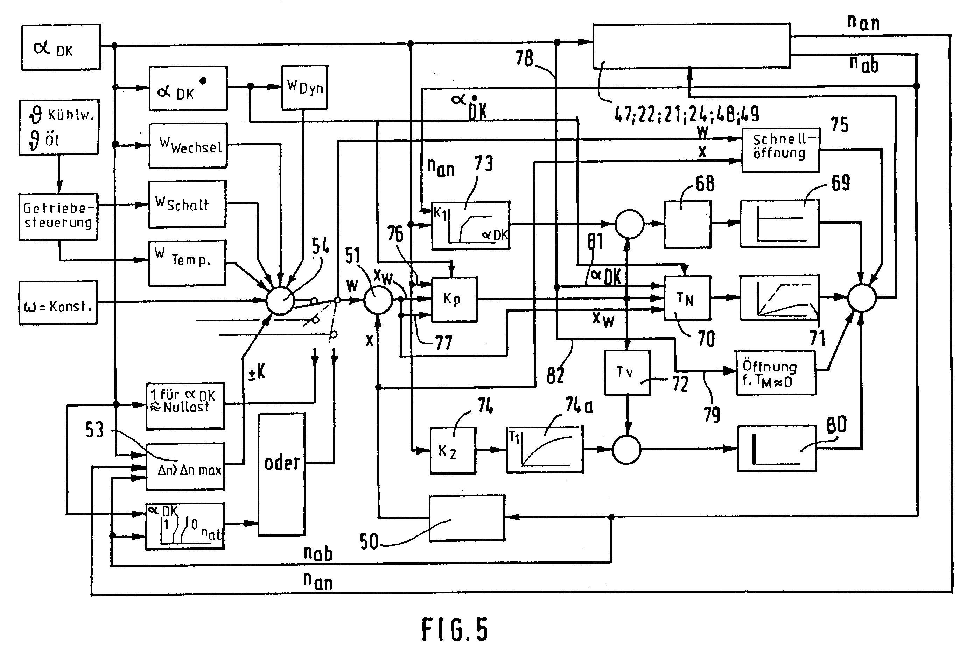

In der Fig. 5 ist ein erweitertes Blockschaltbild dargestellt, das einen Grundregelkreis gemäß Fig. 3 enthält. Die Funktionen Antriebsmotor 47, Antriebswelle 22, Kupplung 21, Abtriebswelle 24, Übertragungseinheit 48 und Ausgangswelle 49 sind in einem gemeinsamen Block zusammengefaßt. In Übereinstimmung mit Fig. 3 wird über die Regelgrößenberechnungseinheit 50 aus der Drehzahl $n_{ab}$, also einer Drehzahl abtriebsseitig zur Kupplung 21, die Drehgeschwindigkeitsdifferenz $\Delta\omega$ bestimmt und der Vergleichereinheit 51 zugeführt. In die Summiereinheit 54 gehen Führungsgrößen folgender Betriebsparameter des Kraftfahrzeugs ein: Laständerungsgeschwindigkeit $\dot{\alpha}_{DK}$, $w_{Wechsel}$ als Wechsel von Zug- auf Schubbetrieb, $w_{Schalt}$ für einen Schaltvorgang des Kraftfahrzeuggetriebes und $w_{Temp}$ als Wert für die Temperatur des Kühlwassers des Antriebsmotors. Der Regler weist einen P-Anteil auf, der durch Blöcke 68 und 69 gekennzeichnet ist. Weiterhin weist er einen I-Anteil auf, gekennzeichnet durch Blöcke 70 und 71. Schließlich hat der Regler noch einen D-Anteil, der anhand von Blöcken 72 und 80 dargestellt ist. Auf den P-Anteil wirkt ein Steuerwert K1, auf den I-Anteil unmittelbar die Last in Abhängigkeit der Drosselklappenstellung $\alpha_{DK}$ und/oder $\dot{\alpha}_{DK}$ und/oder $x_w$ und auf den D-Anteil ein Korrekturwert $K_2$.

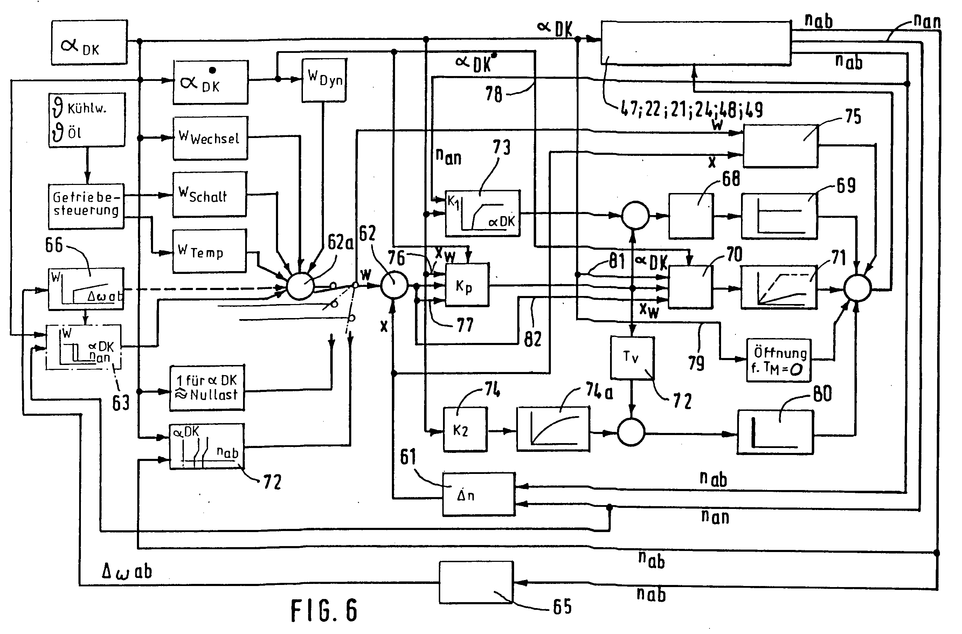

Die Fig. 6 stellt ein erweitertes Blockschaltbild der Fig. 4 dar. Dabei ist wiederum als Regelstrecke ein Block dargestellt, der die Funktionen Antriebsmotor 47, Antriebswelle 22, Kupplung 21, Abtriebswelle 24, Übertragungseinheit 48 und Ausgangswelle 49 enthält. Die Drehzahlen $n_{an}$ und $n_{ab}$ der Antriebswelle 22 und der Abtriebswelle 24 werden der Regelgrößenberechnungseinheit 61 zugeleitet, die den Wert der Drehzahldifferenz $\Delta n$ bildet und diesen der Vergleicher- oder Summiereinheit 62 als Istwert x zuführt. Eine zweite Regelgrößenberechnungseinheit 65 ermittelt aufgrund der Drehzahl $n_{ab}$ Drehgeschwindigkeitsdifferenzen $\Delta\omega_{ab}$ und führt diesen Wert dem zweiten Sollwertgeber 66 zu. Der erste Sollwertgeber 63 bildet aufgrund der Betriebsparameter Motorlast aus Drosselklappenstellung $\alpha_{DK}$ und Motordrehzahl $n_M$ einen ersten Sollwert w. Je nach Ausbildung der Einrichtung kann der zweite Sollwertgeber 66 adaptiv auf den ersten Sollwertgeber 63 wirken oder der zweite Sollwert wird der Vergleicher- oder Summiereinheit 62 direkt zugeleitet und zum ersten Sollwert addiert (dargestellt als gestrichelter Pfad).

Es sind wiederum Sonderfunktionen vorhanden, die den Sollwert erhöhen und damit über den Regler wirken. So wird zum einen die Lasränderungsgeschwindigkeit $\dot{\alpha}_{DK}$ ermittelt und als Führungsgröße $W_{dyn}$ der Vergleicher- oder Summiereinheit 62 zugeführt. Dargestellt als Führungsgröße $w_{Wechsel}$ ist eine Sensoreinrichtung, die die Motorlast ermittelt und derart auf den Sollwert einwirkt, daß unterhalb einer bestimmten Motorlast im Zug- wie Schubbetrieb eine erhöhte Differenzdrehzahl $\Delta n$ eingestellt wird. Die Einrichtung, bezeichnet als Führungsgröße $w_{Schalt}$ überwacht Schaltvorgänge des Fahrzeuggetriebes 48. Die Einrichtung, angegeben im Block Führungsgröße $w_{Temp}$ sorgt dafür, daß in Abhängigkeit der Temperatur des Kühlwassers des Antriebsmotors oder der Öltemperatur des KraftfahrzeuggetriebeS die Kupplung mehr oder weniger eingerückt oder geöffnet ist. Ein Block 72 öffnet die Kupplung bei niedriger Drehzahl $n_{ab}$, ein Block 73 stellt in Abhängigkeit von der Motorlast eine bestimmte Schließkraft der Kupplung ein. Ein Block 74 mit nachgeordnetem Zeitglied 74a und dem D-Glied 80 bewirkt ein dynamisches Verhalten der Steuergröße y und der Schließkraft der Kupplung, so daß verzögerte Steuergrößenänderungen und verzögert wirksame Kupplungsschließkraftänderungen bei schnellen Motorlaständerungen kompensiert werden können. Ein Block 75 bewirkt eine Schnellöffnung der Kupplung nach einem vorgegebenen zeitlichen Gradienten, wenn die Differenzdrehzahl $\Delta n$ ihren Sollwert unterschreitet und zusätzlich eine weitere Schwelle unterhalb des Sollwertes unterschreitet mit dem Ziel, daß die Tendenz der Kupplung, sich zu schließen, verhindert wird.

Die Regeleinrichtung weist einen Proportionalanteil auf, der in Abhängigkeit von der Motorlast $\alpha_{DK}$ verändert wird, so daß mit steigendem Wert $\alpha_{DK}$ der Proportionalanteil vergrößert wird (Pfad 76). Über einen Pfad 77 wird der Proportionalanteil in Abhängigkeit von der Regelabweichung $x_w$ so verändert, daß mit größeren Regelabweichungen der Proportionalanteil vergrößert wird. Über einen Signalpfad 78 wird bei schneller Änderung der Motorlast der Integralanteil der Regeleinrichtung dahingehend verändert, daß sein Eingriff stärker wird, als bei konstanter oder sich nur langsam ändernder Motorlast, so daß die Tendenz der Differenzdrehzahl $\Delta n$, bei schneller Änderung der Motorlast weit von ihrem Sollwert abzuweichen, verringert wird. Schließlich ist noch ein Signalpfad 79 vorgesehen, der den Momentenfluß über die Kupplung überwacht und dann, wenn kein Momentenfluß stattfindet, die Steuergröße y auf Null setzt, von wo aus die Regelung wieder startet, wenn ein erneuter Momentenaufbau erfolgt.

In der Fig. 7 ist eine elektronische Einrichtung zur Ermittlung von Drehzahlen und Drehgeschwindigkeitsdifferenzen schematisch dargestellt. Eine Schlitzscheibe 55 wirkt mit einem Drehzahlsensor 56 zusammen, wobei die ermittelten Drehzahlwerte einer aus einem Impulsformer 57 und einem Mono-Flop 58 bestehenden Impulsflächenaufbereitung zugeführt werden. Diese Impulsflächenaufbereitung erzeugt für die jeweilige Eingangsdrehzahl exakt gleiche Impulsflächen. Die Impulsfolgen durchlaufen einen Bandpaßfilter 59, welcher Restwelligkeit und gleichzeitig die selektiven Eckdaten des Drehschwingungssignals bestimmt. Dieses Signal durchläuft eine Stufe 60, deren Ausgangsspannung einen direkten Bezug zur Istgröße x der Drehgeschwindigkeitsdifferenz $\Delta\omega$ oder der Wellendrehzahl aufweist.

Bezugszeichen

| | | |
|---|---|---|
| 1 | Hydraulikpumpe |
| 2 | Hauptdruckleitung |
| 3 | Druckreduzierventil |
| 4 | Erstes Regelventil |
| 5 | Zweites Regelventil |
| 6 | Schmierventil |
| 7 | Drucksteuerventil |
| 8 | Ablaufleitung |
| 9 | Vorsteuerleitung |
| 10 | Dämpfungsglied |
| 11 | Stirnseitiger Vorsteuerraum von 4 |
| 12 | Steuerraum von 4 |

| | |
|---|---|
| 13a | Ringraum von 4 |
| 13b | Ringraum von 4 |
| 13c | Ringraum von 4 |
| 13d | Ringraum von 4 |
| 13e | Ringraum von 4 |
| 14 | Feder |
| 15 | Kolbenschieber von 4 |
| 16 - 18 | Steuerkolben von 15 |
| 19 | Erste Betätigungsleitung |
| 20 | Erster Betätigungsraum |
| 21 | Reibungskupplung |
| 22 | Antriebswelle |
| 23 | Hydrodynamischer Drehmomentwandler |
| 24 | Abtriebswelle |
| 25 | Verbindungsleitung |
| 26 | Stirnseitiger Vorsteuerraum von 5 |
| 27 | Steuerschieber von 5 |
| 28 - 30 | Steuerkolben von 27 |
| 31a | Ringraum von 5 |
| 31b | Ringraum von 5 |
| 31c | Ringraum von 5 31d Ringraum von 5 |
| 32 | Zweite Betätigungsleitung |
| 33 | Kühler |
| 34 | Zweiter Betätigungsraum |
| 35 | Ventilschieber von 6 |
| 36 | Feder von 6 |
| 37 | Steuerraum von 6 |
| 38 + 39 | Steuerkolben von 6 |
| 40a | Ringraum von 6 |
| 40b | Ringraum von 6 |
| 40c | Ringraum von 6 |
| 41 | Schmierölleitung |
| 42 | Leitung |
| 43 | Drossel |
| 44 | Steuergerät |
| 45 | Leitung |
| 46 | Drossel |
| 47 | Antriebsmotor |
| 48 | Übertragungseinheit |
| 49 | Ausgangswelle |
| 50 | Regelgrößenberechnungseinheit |
| 51 | Vergleichereinheit |
| 52 | Regler |
| 53 | Maximalschlupf-Überwachungseinheit |
| 54 | Vergleichereinheit |
| 55 | Schlitzscheibe |
| 56 | Drehzahlsensor |
| 57 | Impulsformer |
| 58 | Mono-Flop |
| 59 | Bandpaßfilter |
| 60 | Signalanpaßstufe |
| 61 | Regelgrößenberechnungseinheit |
| 62 | Vergleicher- oder Summiereinheit |
| 63 | Erster Sollwertgeber |
| 64 | Regler |

| | |
|---|---|
| 65 | Regelgrößenberechnungseinheit |
| 66 | Zweiter Sollwertgeber |
| 67 | Pfad |
| 67a | Pfad |
| 68 | Block für P-Anteil |
| 69 | Block für P-Anteil |
| 70 | Block für I-Anteil |
| 71 | Block für I-Anteil |
| 72 | Block für Öffnen der Kupplung bei niedriger Drehzahl $n_{an}$ |
| 73 | Block für Schließkraft der Kupplung |
| 74 | Block für Kompensation von Steuergrößen- und Kupplungsschließkraftänderungen |
| 74a | Zeitglied |
| 75 | Block für Schnellöffnung der Kupplung |
| 76 | Pfad |
| 77 | Pfad |
| 78 | Signalpfad |
| 79 | Block für Öffnung für $T_M = 0$ |
| 80 | Block für D-Glied |
| 81 | Signalpfad |
| 82 | Signalpfad |

**Patentansprüche**

1. Verfahren zur Regelung einer Kupplung, die innerhalb eines Antriebsstranges zwischen einer An- und einer Abtriebswelle angeordnet ist, wobei im Antriebsstrang eine Sensoreinrichtung (55, 56) zur Erfassung einer Drehgeschwindigkeitsdifferenz $\Delta\omega$ als Maß einer Drehungleichförmigkeit vorgesehen ist, mit einer Regeleinrichtung (52), die in Abhängigkeit von der durch die Sensoreinrichtung ermittelten Regelgröße die der Kupplung zuzuführende, die Drehzahldifferenz $\Delta n$ beeinflussende Stellgröße y steuert, dadurch **gekennzeichnet,** daß die Regeleinrichtung (52) eine Vergleichereinheit (51) aufweist, in welcher ein im Antriebsstrang hinter der Kupplung (21) vermittelter Istwert x der Drehgeschwindigkeitsdifferenz $\Delta\omega$ mit einem vorgegebenen festen Grenzwert $w_{konst}$ verglichen wird, wobei bei Erreichen bzw. Überschreiten des Grenzwertes $w_{konst}$ dieDrehgeschwindigkeitsdifferenz $\Delta\omega$ durch Verändern der Stellgröße y der Kupplung (21) auf den Grenzwert $w_{konst}$ begrenzt wird.

2. Verfahren zur Regelung einer Kupplung, die innerhalb eines Antriebsstranges eines Kraftfahrzeuges zwischen einer mit einer Brennkraftmaschine (47) verbundenen Antriebswelle (22) und einer mit einer Getriebeeinheit (48) verbundenen Abtriebswelle (24) angeordnet ist, mit einem Meßwertgeber zur Erfassung einer Differenzdrehzahl $\Delta n$ von An- und Abtriebswel-

le (22 bzw. 24), mit einer Sensoreinrichtung zur Erfassung einer Drehgeschwindigkeitsdifferenz $\Delta\omega$ als Maß einer Drehungleichförmigkeit und mit einer Regeleinrichtung (64), die in Abhängigkeit von der durch den Meßwertgeber ermittelten Regelgröße x die der Kupplung (21) zuzuführende, die Drehzahldifferenz $\Delta$n beeinflussende Stellgröße y steuert, dadurch **gekennzeichnet,** daß einem der Regeleinrichtung (64) zugeordneten ersten Sollwertgeber (63) Betriebsparameter der Brennkraftmaschine (47), die ursächlich sind für Drehgeschwindigkeitsdifferenzen $\Delta\omega$ im Antriebsstrang, zugeführt werden, aufgrund welcher der erste Sollwertgeber (63) einen Sollwert w der Drehzahldifferenz $\Delta$n ermittelt, wobei der Sollwert w und die Regelgröße x einer Vergleicher- oder Summiereinheit (62) der Regeleinrichtung 64) zugeführt werden, daß die Drehgeschwindigkeitsdifferenz $\Delta\omega$ im Antriebsstrang hinter der kupplung (21) einem zweiten Sollwertgeber (66) zugeführt wird, der bei definiertem Unterschreiten, Erreichen bzw. Überschreiten eines Grenzwertes der Drehgeschwindigkeitsdifferenz $\Delta\omega$ einen zweiten Sollwert unmittelbar der Vergleicher- oder Summiereinheit (62) oder dem ersten Sollwertgeber (63), dessen ersten Sollwert w adaptiv beeinflussend, zuführt.

3. Verfahren nach Anspruch 1, dadurch **gekennzeichnet,** daß die Drehzahldifferenz $\Delta$n zwischen An- und Abtriebswelle (22 und 24 bzw. 49) auf einen Maximalwert $\Delta$n $_{max}$ und/oder eine maximale Schlupfdauer begrenzt wird.

4. Verfahren nach Anspruch 3, dadurch **gekennzeichnet,** daß bei Erreichen bzw. Überschreiten der maximalen Drehzahldifferenz $\Delta$n $_{max}$ und/oder der maximalen Schlupfdauer in Abhängigkeit von der Motorlast der Grenzwert um einen Korrekturwert K erhöht oder reduziert wird.

5. Verfahren zur Regelung einer Kupplung nach Anspruch 2, dadurch **gekennzeichnet,** daß als Betriebsparameter der Brennkraftmaschine (47) die Last ermittelt wird und unterhalb einer bestimmten Last im Zug- sowie Schubbetrieb des Kraftfahrzeuges die Stellgröße y der Kupplung (21) auf eine erhöhte Drehzahldifferenz $\Delta$n verändert wird.

6. Verfahren zur Regelung einer Kupplung nach Anspruch 5, dadurch **gekennzeichnet,** daß die Laständerungsgeschwindigkeit $\dot{\alpha}_{DK}$ der Brennkraftmaschine (47) ermittelt wird und bei Überschreiten eines Maximalwertes $\dot{\alpha}_{DK\,max}$ der Laständerungsgeschwindigkeit der Sollwert der

Drehzahldifferenz $\Delta$n von An- und Abtriebswelle (22 bzw. 24) bei Lastrücknahme erhöht und bei Lastzunahme verringert oder konstant gehalten wird.

7. Verfahren zur Regelung einer Kupplung nach Anspruch 2, dadurch **gekennzeichnet,** daß in der Vergleicher- oder Summiereinheit (62) fortlaufend der Istwert x der Drehzahldifferenz $\Delta$n mit einem Sollwert w verglichen wird, der einer sehr geringen Drehgeschwindigkeitsdifferenz $\Delta\omega$ entspricht, und daß die daraus entstehende Abweichung $x_w$ der Regeleinrichtung (64) zugeführt wird, die einen Proportionalanteil und einen Integralanteil aufweist.

8. Verfahren zur Regelung einer Kupplung nach Anspruch 7, dadurch **gekennzeichnet,** daß der Proportionalanteil in Abhängigkeit von der Motorlast $\alpha_{DK}$ verändert wird, so daß mit steigender Motorlast der Proportionalanteil vergrößert wird.

9. Verfahren zur Regelung einer Kupplung nach Anspruch 7, dadurch **gekennzeichnet,** daß der Integralanteil der Regeleinrichtung bei größeren Regelabweichungen $x_w$ und/oder in Abhängigkeit der Motorlast $\alpha_{DK}$ und/oder bei schneller Änderung der Motorlast $\alpha_{DK}$ dahingehend verändert wird, daß sein Eingriff verstärkt wird.

10. Verfahren zur Regelung einer Kupplung nach Anspruch 7, dadurch **gekennzeichnet,** daß der Proportionalanteil in Abhängigkeit der Laständerungsgeschwindigkeit $\dot{\alpha}_{DK}$ derart verändert wird, daß mit steigender Laständerungsgeschwindigkeit $\dot{\alpha}_{DK}$ der Proportionalanteil vergrößert wird.

11. Verfahren zur Regelung einer Kupplung nach, Anspruch 7, dadurch **gekennzeichnet,** daß der Proportionalanteil in Abhängigkeit der Regelabweichung $x_w$ an der Vergleicher- oder Summiereinheit (62) so gebildet werden, daß mit größeren Regelabweichungen $x_w$ ein Faktor des Proportionalanteils vergrößert wird.

12. Verfahren zur Regelung einer Kupplung nach einem der Ansprüche 1 oder 2, dadurch **gekennzeichnet,** daß jedem Wert der Last $\alpha_{DK}$ der Brennkraftmaschine (47) in der Regeleinrichtung (64) eine bestimmte Stellgröße y zugeordnet ist.

13. Verfahren zur Regelung einer Kupplung nach Anspruch 12, dadurch **gekennzeichnet,** daß eine statische Zuordnung zwischen dem Wert

der Motorlast $\alpha_{DK}$ und der der Schließkraft der Kupplung (21) entsprechenden Stellgröße y fortlaufend adaptiv angepaßt wird, derart, daß in einem stationären Betriebspunkt die Drehzahldifferenz $\Delta n$ für eine vorgegebene Zeit ihren Sollwert erreicht, wobei diese Einregelung der Regelgröße x auf ihren Sollwert durch die Regeleinrichtung ausgeführt wird, auch wenn die statische Zuordnung zwischen dem Wert der Motorlast $\alpha_{DK}$ und der Stellgröße y sich verschoben hat, woraus die für die adaptive Zuordnung zwischen Motorlast $\alpha_{DK}$ und Stellgröße y notwendigen Veränderungen abgeleitet werden.

14. Verfahren zur Regelung einer Kupplung nach einem der Ansprüche 1 oder 2, dadurch **gekennzeichnet,** daß die Regelung einen zusätzlichen ersten Signalpfad aufweist, über welchen mittels eines Anpaßwertes (74), eines Zeitgliedes (74a) und eines Differentialgliedes (80) die verzögerte Stellgrößenänderung (Kupplungsdruck) und verzögert wirksame Kupplungsschließkraftänderungen bei schnellen Motorlaständerungen kompensiert werden können, wobei der Anpaßwert (74) und das Zeitglied (74a) als verzögertes Proportionalglied wirken, und diese das dynamisch verzögerte Verhalten der Stellgröße und der wirksamen Schließkraft simulieren.

15. Verfahren zur Regelung einer Kupplung nach Anspruch 2, dadurch **gekennzeichnet,** daß die Stellgröße y über einen zweiten Signalpfad mit einem vorgegebenen zeitlichen Gradienten schnell abgesenkt wird, wenn die Drehzahldifferenz ihren Sollwert und eine zusätzliche, unterhalb des Sollwertes liegende Schwelle unterschreitet.

16. Verfahren zur Regelung einer Kupplung nach einem der Ansprüche 1 oder 2, dadurch **gekennzeichnet,** daß ein Geberelement vorgesehen ist, daß den im Zug- und Schubbetrieb über die Kupplung erfolgenden Momentenfluß $T_M$ erfaßt und dann, wenn kein Momentenfluß $T_M$ stattfindet, die Stellgröße y auf Null setzt, von wo aus die Regelung wieder startet, wenn ein erneuter Momentenaufbau erfolgt.

17. Verfahren zur Regelung einer Kupplung, die innerhalb eines Antriebsstranges einem zwischen Brennkraftmaschine (47) und Getriebe (48) angeordneten, hydrodynamischen Drehmomentwandler (23) parallel geschaltet ist, nach Anspruch 1 oder 2, dadurch **gekennzeichnet,** daß bei Unterschreitung eines ersten Temperaturgrenzwertes einer Kühlwassertemperatur der Brennkraftmaschine (47) oder einer Schmieröltemperatur des Getriebes (48) die Kupplung (21) selbsttätig in ihren ausgerückten Zustand gesteuert ist.

18. Verfahren zur Regelung einer Kupplung nach Anspruch 17, dadurch **gekennzeichnet,** daß oberhalb des ersten Temperaturgrenzwertes ein zweiter Temperaturgrenzwert vorgesehen ist, und daß bei Betrieb zwischen dem ersten und dem zweiten Temperaturgrenzwert die Drehzahldifferenz $\Delta n$ an der Kupplung (21) erhöht wird.

19. Verfahren zur Regelung einer Kupplung nach Anspruch 17, dadurch **gekennzeichnet,** daß oberhalb des ersten Temperaturgrenzwertes ein zweiter Temperaturgrenzwert vorgesehen ist, wobei bei Überschreitung des ersten Temperaturgrenzwertes mit zunehmender Temperatur bis zum zweiten Temperaturgrenzwert nach einer definierten Kennlinie die vorgegebene Drehzahldifferenz $\Delta n$ zurückgenommen wird.

20. Verfahren zur Regelung einer Kupplung nach Anspruch 17, dadurch **gekennzeichnet,** daß von einer Steuerelektronik der Brennkraftmaschine (47) nach dem Start für eine kurze Zeit der Regeleinrichtung (64) eine Temperaturinformation über die Motoröltemperatur oder die Motorkühlwassertemperatur zur Verfügung steht, und daß mit dem Temperaturwert eine zeitabhängige Kennlinie gesetzt wird, nach der eine erhöhte Drehzahldifferenz $\Delta n$ zurückgenommen wird.

21. Vorrichtung zur Durchführung des Verfahrens nach Anspruch 1 oder 2, dadurch **gekennzeichnet,** daß die als Reibungskupplung (21) ausgebildete Kupplung über ein doppelt wirkendes Stellelement in ihre ein- und ausgerückte Stellung bewegbar ist, wobei das Stellelement beidseitig über Betätigungsräume (20 und 34) mit einem von der Regeleinrichtung (52,64) geregelten hydraulischen Betätigungsdruck als Stellgröße y beaufschlagbar ist.

22. Vorrichtung nach Anspruch 21, dadurch **gekennzeichnet,** daß jedem Betätigungsraum (20, 34) ein den Betätigungsdruck einstellendes Regelventil (4 und 5) zugeordnet ist, wobei beide Regelventile (4 und 5) über einen von der Regeleinrichtung eingestellten Vorsteuerdruck beaufschlagbar sind.

23. Vorrichtung nach Anspruch 21, dadurch **gekennzeichnet,** daß ein erstes Regelventil (4), das den Betätigungsdruck in einem ersten Betätigungsraum (20) der Reibungskupplung (21) einstellt, als hydraulisch vorgesteuertes Regelventil ausgebildet ist, das in einer ersten Schaltstellung bei geringem Vorsteuerdruck bzw. Vorsteuerdruck gleich Null den ersten Betätigungsraum (20) druckbeaufschlagt und in einer zweiten Schaltstellung bei erhöhtem Vorsteuerdruck den ersten Betätigungsraum (20) entleert sowie das zweite Regelventil (5) derart mit Vorsteuerdruck beaufschlagt und verstellt, daß der zweite Betätigungsraum (34) mit einem hydraulischen Betätigungsdruck beaufschlagt wird.

24. Vorrichtung nach Anspruch 22, dadurch **gekennzeichnet,** daß ein als 3/2-Wegeventil ausgebildetes Schmierventil (6) an das Hauptdrucksystem (Hauptdruckleitung 2) und an einen Entleerungsanschluß (Ringraum 31c) des zweiten Regelventils (5), der in dessen erster Stellung Druckmittel aus dem zweiten Betätigungsraum (34) abführt, angeschlossen ist, wobei das Schmierventil (6) dem Getriebe jeweils Druckmittel aus dem Hauptdrucksystem oder dem Entleerungsanschluß (Ringraum 31c) zur Schmierung zuleitet.

25. Vorrichtung nach Anspruch 24, dadurch **gekennzeichnet,** daß das Schmierventil (6) mit dem Druck der Vorsteuerleitung (9) vorgesteuert ist.

26. Vorrichtung nach Anspruch 24, dadurch **gekennzeichnet,** daß das Schmierventil (6) mit dem Druck des Entleerungsanschlusses (Ringraum 31c) des zweiten Wegeventils (5) vorgesteuert ist.

27. Vorrichtung nach Anspruch 21, dadurch **gekennzeichnet,** daß in der Vorsteuerleitung (9) ein elektromagnetisches Drucksteuerventil (7) angeordnet ist.

28. Vorrichtung nach Anspruch 21, dadurch **gekennzeichnet,** daß in der Vorsteuerleitung (9) ein hydraulisches Dämpfungsglied (10) angeordnet ist.

29. Vorrichtung zur Durchführung des Verfahrens nach einem der Ansprüche 1 oder 2, dadurch **gekennzeichnet,** daß zur Erfassung von Drehzahldifferenzen Δn bzw. Drehgeschwindigkeitsdifferenzen Δω eine mehrpolige Schlitzscheibe (55) bzw. ein Zahnrad, die mit einem Drehzahlsensor (56) zusammenwirken, vorgesehen sind, wobei in einer nachgeschalteten Impulsflächenaufbereitung (Impulsformer 57 und Mono-Flop 58) exakt gleiche Impulsflächen erzeugt werden, von welchen in einem nachfolgenden Bandpaßfilter (59) Restwelligkeit und selektive Eckdaten des Drehgeschwindigkeitssignals bestimmt werden und schließlich in einer nachgeschalteten Stufe (60) eine einen direkten Bezug zur Istgröße aufweisende Ausgangsspannung erzeugt wird.

**Claims**

1. Method of regulating a clutch which is disposed within a drive chain between an input shaft and an output shaft, a sensor device (55, 56) being provided for detecting a rotational velocity difference Δω as a measure of a rotational irregularity, having a control device (52) which controls the manipulated variable y to be fed to the clutch and influencing the rotary speed difference Δn as a function of the controlled variable determined by the sensor device, characterized in that the control device (52) has a comparator unit (51) in which an actual value x, determined in the drive chain downstream of the clutch (21), of the rotational velocity difference Δω is compared with a predetermined fixed limit value $w_{const}$, the rotational velocity difference Δω being limited to the limit value $w_{const}$ altering the manipulated variable y of the clutch (21) when the limit value $w_{const}$ is reached or exceeded.

2. Method of controlling a clutch which is disposed within a drive chain of a motor vehicle between an input shaft (22) connected to an internal combustion engine (47) and an output shaft (24) connected to transmission unit (48), having a detecting element for detecting a differential rotary speed of input shaft and output shaft (22 and 24, respectively), having a sensor device for detecting a rotational velocity difference Δω as a measure of a rotational irregularity and having a control device (64) which controls the manipulated variable y to be fed to the clutch (21) and influencing the rotary speed difference Δn as a function of the controlled variable x determined by the detecting element, characterized in that there are fed to a first setpoint generator (63) associated with the control device (64) operating parameters of the internal combustion engine (47) which are responsible for rotational velocity differences Δω in the drive chain and on the basis of which the first setpoint generator (63) determines a setpoint value w of the rotary speed difference Δn, the setpoint value w and the controlled variable x being fed to a comparator unit or summing unit (62) of the control device (64), and in that the rotational velocity difference $\Delta\omega$ in the drive chain downstream of the clutch (21) is fed to a second setpoint generator (66) which, when a limit value of the rotational velocity difference $\Delta\omega$ is, in a defined manner, not reached, or is reached or exceeded, feeds a second setpoint value directly to the comparator unit or summing unit (62) or to the first setpoint generator (63), adaptively influencing the first setpoint value w of the latter.

3. Method according to Claim 1, characterized in that the rotary speed difference $\Delta n$ between input and output shaft (22 and 24 or 49, respectively) is limited to a maximum value $\Delta n_{max}$ and/or a maximum slip duration.

4. Method according to Claim 3, characterized in that, when the maximum rotary speed difference $\Delta n_{max}$ and/or the maximum slip duration is reached or exceeded, the limit value is increased or reduced by a correction value K as a function of the engine load.

5. Method of controlling a clutch according to Claim 2, characterized in that the load is determined as operating parameter of the internal combustion engine (47) and, below a certain load during tractive or coasting operation of the motor vehicle, the manipulated variable y of the clutch (21) is altered to an increased rotary speed difference $\Delta n$.

6. Method of controlling a clutch according to Claim 5, characterized in that the load change rate $\dot{\alpha}_{DK}$ of the internal combustion engine (47) is determined and, if a maximum value $\dot{\alpha}_{DK\ max}$ of the load change rate is exceeded, the setpoint value of the rotary speed difference $\Delta n$ of input shaft and drive shaft (22 and 24, respectively) is increased in the case of load reduction and reduced or kept constant in the case of load increase.

7. Method of controlling a clutch according to Claim 2, characterized in that the actual value x of the rotary speed difference $\Delta n$ is continuously compared in the comparator unit or summing unit (62) with a setpoint value w which corresponds to a very low rotational velocity difference $\Delta\omega$, and in that the deviation $x_w$ resulting therefrom is fed to the control device (64), which has a proportional component and an integral component.

8. Method of controlling a clutch according to Claim 7, characterized in that the proportional component is altered as a function of the en-gine load $\alpha_{DK}$ so that the proportional component is increased with increasing engine load.

9. Method of controlling a clutch according to Claim 7, characterized in that, for fairly large control deviations $x_w$ and/or as a function of the engine load $\alpha_{DK}$ and/or for rapid change in engine load $\alpha_{DK}$, the integral component of the control unit is altered so that its action is intensified.

10. Method of controlling a clutch according to Claim 7, characterized in that the proportional component is altered as a function of the load change rate $\dot{\alpha}_{DK}$ so so that the proportional component is increased with increasing load change rate $\dot{\alpha}_{DK}$

11. Method of controlling a clutch according to Claim 7, characterized in that the proportional component is derived as a function of the control deviation $x_w$ at the comparator unit or summing unit (62) so that, with fairly large control deviations $x_w$, a factor of the proportional component is increased.

12. Method of controlling a clutch according to Claims 1 or 2, characterized in that a certain manipulated variable y is assigned in the control device (64) to every value of the load $\alpha_{DK}$ of the internal combustion engine (47).

13. Method of controlling a clutch according to Claim 12, characterized in that a static assignment between the value of the engine load $\alpha_{DK}$ and the manipulated variable y corresponding to the closing force of the clutch (21) is continuously adjusted adaptively so that, at a steady-state operating point, the rotary speed difference $\Delta n$ reaches its setpoint value for a predetermined time, this adjustment of the controlled variable x to its setpoint value being performed by the control device even if the static assignment between the value of the engine load $\alpha_{DK}$ and the manipulated variable y has shifted, from which the alterations necessary for the adaptive assignment between engine load $\alpha_{DK}$ and manipulated variable y are derived.

14. Method of controlling a clutch according to either of Claims 1 or 2, characterized in that the control has an additional first signal path via which the delayed manipulated variable change (clutch pressure) and delayed-action clutch closure force changes can be compensated for in the event of rapid engine load changes by means of an adaptive value (74), a time element (74a) and a differential element (80), the adaptive value (74) and the timing element (74a) acting as delayed proportional elements and these simulating the dynamically delayed behaviour of the manipulated variable and the effective closing force.

15. Method of controlling a clutch according to Claim 2, characterized in that the manipulated variable y is rapidly reduced with a predetermined gradient with respect to time via a second signal path if the rotary speed difference drops below its setpoint value and an additional threshold situated below the setpoint value.

16. Method of controlling a clutch according to either of Claims 1 or 2, characterized in that a sensor element is provided which measures the torque flow $T_M$ taking place via the clutch in tractive and coasting operation and if no torque flow $T_M$ is taking place, it sets the manipulated value y to zero, from which point the control starts again when a renewed torque build-up takes place.

17. Method of controlling a clutch which is connected within a drive train in parallel with a hydrodynamic torque converter (23) disposed between internal combustion engine (47) and transmission (48), according to Claims 1 or 2, characterized in that, if a cooling water temperature of the internal combustion engine (47) or a lubricant oil temperature of the transmission (48) drops below a first temperature limit value, the clutch (21) is automatically driven into its disengaged state.

18. Method of controlling a clutch according to Claim 17, characterized in that a second temperature limit value is provided above the first temperature limit value and in that the rotary speed difference $\Delta n$ at the clutch (21) is increased for operation between the first and the second temperature limit value.

19. Method of controlling a clutch according to Claim 17, characterized in that a second temperature limit value is provided above the first temperature limit value, and, if the first temperature limit value is exceeded, the predetermined rotary speed difference $\Delta n$ is reduced in accordance with a defined characteristic curve as the temperature increases to the second temperature limit value.

20. Method of controlling a clutch according to Claim 17, characterized in that temperature information on the engine oil temperature or the engine cooling water temperature is available to the control device (64) from a control electronics system of the internal combustion engine (47) for a short time after starting, and in that the temperature value sets a time-dependent characteristic curve in accordance with which an increased rotary speed difference $\Delta n$ is reduced.

21. Device for carrying out the method according to Claim 1 or 2, characterized in that the clutch, which is designed as a friction clutch (21), can be moved by means of a double-action adjusting element to its engaged and disengaged positions, a hydraulic actuating pressure controlled by the control unit (52, 64) being able to act as manipulated variable y on the adjusting element from both sides via actuating chambers (20 and 34).

22. Device according to Claim 21, characterized in that a control valve (4 and 5) which sets the actuating pressure is assigned to each actuating chamber (20, 34), a pilot pressure set by the control device being able to act on both control valves (4 and 5).

23. Device according to Claim 21, characterized in that a first control valve (4), which sets the actuating pressure in a first actuating chamber (20) of the friction clutch (21) is designed as a hydraulically preselected control valve which, in a first selection position, applies pressure to the first actuating chamber (20) at low pilot pressure or pilot pressure equal to zero and, in a second selection position, discharges the first actuating chamber (20) at increased pilot pressure and acts on the second control valve (5) with pilot pressure and adjusts it in such a manner that the second actuating chamber (34) is acted on by a hydraulic actuating pressure.

24. Device according to Claim 22, characterized in that a lubricating valve (6) designed as 3/2-port directional valve is connected to the main pressure system (main pressure line 2) and to a discharge connection (annular chamber 31c) of the second control valve (5) which, in its first position, removes pressurized fluid from the second actuating chamber (34), and the lubricating valve (6) in each case feeds pressurized fluid to the transmission from the main pressure system or the discharge connection (annular chamber 31c) for the purpose of lubrication.

**25.** Device according to Claim 24, characterized in that the lubricating valve (6) is preselected by the pressure of the pilot line (9).

**26.** Device according to Claim 24, characterized in that the lubricating valve (6) is preselected by the pressure of the discharge connection (annular chamber 31c) of the second directional valve (5).

**27.** Device according to Claim 21, characterized in that an electromagnetic pressure control valve (7) is disposed in the pilot line (9).

**28.** Device according to Claim 21, characterized in that a hydraulic damping element (10) is disposed in the pilot line (9).

**29.** Device for carrying out the method according to either of Claims 1 or 2, characterized in that, to determine the rotary speed differences $\Delta n$ or the rotational velocity differences $\Delta\omega$, a multipole slotted disc (55) and a gear which interact with a rotary speed sensor (56) are provided, exactly equal pulse areas being generated in a downstream pulse-area processing system (pulse shaper 57 and monoflop 58), from which areas residual ripple and selective cutoff data of the rotational velocity signal are determined in a downstream band-pass filter (59) and, finally, an output voltage having a direct relationship to the actual value is generated in a downstream stage (60).

**Revendications**

**1.** Procédé de réglage d'un embrayage disposé entre un arbre d'entrée et un arbre de sortie dans un mécanisme d'entraînement où est prévu un dispositif capteur (55, 56) pour mesurer une différence de vitesse de rotation $\Delta\omega$ servant de mesure d'une uniformité de rotation, avec un dispositif de réglage (52) qui, en fonction de la grandeur de mesure déterminée par le dispositif capteur, commande la grandeur de réglage y à transmettre à l'embrayage et influençant la différence de régime $\Delta n$, **caractérisé** en ce que le dispositif de réglage (52) comporte une unité de comparaison (51) dans laquelle une valeur effective x de la différence de vitesse de rotation $\Delta\omega$, mesurée en aval de l'embrayage (21) dans le mécanisme d'entraînement est comparée à une valeur limite fixe prédéterminée $w_{konst}$, de sorte que si la valeur limite $w_{konst}$ est atteinte ou dépassée, la différence de vitesse de rotation $\Delta\omega$ est limitée à la valeur limite $w_{konst}$ par modification de la grandeur de réglage y de l'embrayage (21).

**2.** Procédé de réglage d'un embrayage disposé dans un mécanisme d'entraînement d'un véhicule automobile, entre un arbre d'entrée (22) lié à un moteur à combustion (47) et un arbre de sortie (24) lié à une unité de transmission (43), comportant un organe de mesure pour mesurer une différence de régime $\Delta n$ entre les arbres d'entrée et de sortie (22 et 24), un dispositif capteur pour mesurer une différence de vitesse de rotation $\Delta\omega$ servant de mesure d'une uniformité de rotation et un dispositif de réglage (64) qui, en fonction de la grandeur de mesure x déterminée par l'organe de mesure, commande la grandeur de réglage y à transmettre à l'embrayage (21) et influençant la différence de régime $\Delta n$, **caractérisé** en ce qu'un premier organe de consigne (63), raccordé à une entrée du dispositif de réglage (64), reçoit des paramètres de fonctionnement du moteur à combustion (47) qui influencent des différences de vitesse de rotation $\Delta\omega$ dans le mécanisme d'entraînement et sur la base desquels le premier organe de consigne (63) détermine une valeur de consigne w de la différence de régime $\Delta n$, la valeur de consigne w et la grandeur mesurée x étant transmises à une unité de comparaison ou de sommation (62) du dispositif de réglage (64), de sorte que la différence de vitesse de rotation $\Delta\omega$ dans le mécanisme de transmission en aval de l'embrayage (21) est transmise à un second organe de consigne (66) qui, pour des valeurs définies inférieures, égales ou supérieures à une valeur limite de la différence de vitesse de rotation $\Delta\omega$, délivre une seconde valeur de consigne directement à l'unité de comparaison ou de sommation (62) ou au premier organe de consigne (63), en influençant de manière adaptative la première valeur de consigne w de celui-ci.

**3.** Procédé selon la revendication 1, **caractérisé** en ce que la différence de régime $\Delta n$ entre les arbres d'entrée et de sortie (22 et 24 ou 49) est limitée a une valeur maximale $\Delta n_{max}$ et/ou par une durée de patinage maximale.

**4.** Procédé selon la revendication 3, **caractérisé** en ce que, si la différence de régime maximale $\Delta n_{max}$ et/ou la durée de patinage maximale est atteinte ou dépassée, la valeur limite est augmentée ou réduite d'une valeur de correction K en fonction de la charge du moteur.

**5.** Procédé selon la revendication 2, **caractérisé** en ce que la charge est mesurée en tant que paramètre de fonctionnement du moteur à combustion (47) et en ce que, au-dessous d'une charge déterminée dans les modes de fonctionnement en traction et en poussée du véhicule, la grandeur de réglage y de l'embrayage (21) est portée à une différence de régime $\Delta n$ plus élevée.

6. Procédé selon la revendication 5, **caractérisé** en ce que la vitesse de variation de charge $\dot{\alpha}_{DK}$ du moteur (47) est mesurée et en ce que, si la vitesse de variation de charge dépasse une valeur maximale $\dot{\alpha}_{DK\ max}$, la valeur de consigne de la différence de régime $\Delta n$ des arbres d'entrée et de sortie (22 et 24) est élevée en cas de réduction de la charge et est réduite ou maintenue constante en cas d'augmentation de la charge.

7. Procédé selon la revendication 2, **caractérisé** en ce que, dans l'unité de comparaison ou de sommation (62), la valeur effective x de la différence de régime $\Delta n$ est comparée en continu à une valeur de consigne w qui correspond à une très faible différence de vitesse de rotation $\Delta \omega$ et en ce que l'écart $x_w$ qui en résulte est délivré au dispositif de réglage (64), lequel comporte une partie proportionnelle et une partie intégrale.

8. Procédé selon la revendication 7, **caractérisé** en ce que la partie proportionnelle est modifiée en fonction de la charge $\alpha_{DK}$ du moteur, de telle sorte que la partie proportionnelle augmente avec la charge du moteur.

9. Procédé selon la revendication 7, **caractérisé** en ce que la partie intégrale du dispositif de réglage est modifiée de façon que son influence augmente avec les écarts de réglage $x_w$ et/ou en fonction de la charge $\alpha_{DK}$ du moteur et/ou en cas de variation rapide de la charge $\alpha_{DK}$ du moteur.

10. Procédé selon la revendication 7, **caractérisé** en ce que la partie proportionnelle est modifiée en fonction de la vitesse de variation de charge $\dot{\alpha}_{DK}$ de façon à augmenter quand ladite vitesse $\dot{\alpha}_{DK}$ augmente.

11. Procédé selon la revendication 7, **caractérisé** en ce que la partie proportionnelle est formée en fonction de l'écart de réglage $x_w$ déterminé dans l'unité de comparaison ou de sommation (62), de telle façon qu'un facteur de proportionnalité augmente avec les écarts de réglage $x_w$.

12. Procédé selon la revendication 1 ou 2, **caractérisé** en ce qu'une grandeur de réglage déterminée y est associée à chaque valeur de la charge $\alpha_{DK}$ du moteur (47) dans le dispositif de réglage (64).

13. Procédé selon la revendication 12, **caractérisé** en ce qu'une relation statique entre la valeur de la charge $\alpha_{DK}$ du moteur et la grandeur de réglage y correspondant à la force de fermeture de l' embrayage (21) est ajustée en continu de manière adaptative, de sorte qu'à un point de fonctionnement stationnaire la différence de régime $\Delta n$ atteint sa valeur de consigne dans un temps prédéfini, cette adaptation de la grandeur mesurée x à sa valeur de consigne étant effectuée par le dispositif de réglage même quand la relation statique entre la valeur de la charge $\alpha_{DK}$ du moteur et la grandeur de réglage y a changé, d'où sont dérivées les modifications nécessaires pour la relation adaptative entre la charge $\alpha_{DK}$ du moteur et la grandeur de réglage y.

14. Procédé selon la revendication 1 ou 2, **caractérisé** en ce que le réglage comporte en outre une première voie de signalisation par laquelle, au moyen d' une valeur d'ajustement (74), d'un élément temporisateur (74a) et d'un élément différentiel (80), la variation retardée de la grandeur de réglage (pression de l'embrayage) et des variations à effet retardé de la force de fermeture de l'embrayage peuvent être compensées en cas de variations rapides de la charge du moteur, où la valeur d'ajustement (74) et l'élément temporisateur (74a) agissent comme un élément proportionnel retardé et simulent le comportement dynamique retardé de la grandeur de réglage et de la force effective de fermeture.

15. Procédé selon la revendication 2, **caractérisé** en ce que la grandeur de réglage y est abaissée rapidement selon un gradient temporel prédéterminé, au moyen d'une seconde voie de signalisation, quand la différence de régime tombe au-dessous de sa valeur de consigne et d'un seuil supplémentaire situé au-dessous de la valeur de consigne.

16. Procédé selon la revendication 1 ou 2, **caractérisé** en ce qu'il est prévu un élément capteur qui mesure le couple $T_M$ transmis par l' embrayage en mode de traction et de poussée et qui met ensuite à zéro la grandeur de réglage y s'il n'y a pas de couple $T_M$, après quoi le réglage recommence quand une nouvelle augmentation de couple se produit.

**17.** Procédé de réglage d'un embrayage disposé, dans un mécanisme d'entraînement, en parallèle à un convertisseur hydrodynamique de couple (23) placé entre un moteur à combustion (47) et une boîte de vitesses (48) selon la revendication 1 ou 2, **caractérisé** en ce que, lorsqu'une température de l'eau de refroidissement du moteur (47) ou une température du lubrifiant de la boîte de vitesses (48) est inférieure à une première limite de température, l' embrayage (21) est mis automatiquement dans son état débrayé.

**18.** Procédé selon la revendication 17, **caractérisé** en ce qu'une seconde limite de température est prévue au-dessus de la première limite de température et en ce que la différence de régime Δn à l' embrayage (21) est augmentée lors du fonctionnement entre la première et la seconde limite de température.

**19.** Procédé selon la revendication 17, **caractérisé** en ce qu'une seconde limite de température est prévue au-dessus de la première limite de température et en ce que la différence de régime prédéfinie Δn est réduite suivant une courbe caractéristique définie lorsque la température augmente au-delà de la première limite jusqu'à la seconde limite.

**20.** Procédé selon la revendication 17, **caractérisé** en ce que, pour une brève période après le démarrage, un dispositif électronique de commande du moteur (47) délivre au dispositif de réglage (64) une donnée de température concernant la température de l'huile du moteur ou la température de l'eau de refroidissement du moteur et en ce que la valeur de température détermine une courbe caractéristique en fonction du temps, suivant laquelle une différence de régime plus élevée Δn est réduite.

**21.** Dispositif pour la mise en oeuvre du procédé selon la revendication 1 ou 2, **caractérisé** en ce que l' embrayage, constitué par un embrayage à friction (21), est mis dans sa position embrayée et dans sa position débrayée au moyen d'un actionneur à double effet, cet actionneur pouvant être sollicité de chaque côté dans des chambres d' actionnement (20 et 34 ) par une pression hydraulique d'actionnement réglée par le dispositif de réglage (52, 64) et servant de grandeur de réglage y.

**22.** Dispositif selon la revendication 21, **caractérisé** en ce que chaque chambre d'actionnement (20, 34) est précédée d'une soupape de réglage (4, 5) qui règle la pression d'actionnement, les deux soupapes de réglage (4 et 5) étant commandées par une pression de pilotage réglée par le dispositif de réglage.

**23.** Dispositif selon la revendication 21, **caractérisé** en ce qu'une première soupape de réglage (4), qui règle la pression d' actionnement dans une première chambre d'actionnement (20) de l' embrayage à friction (21), est formée par une soupape de réglage pilotée hydrauliquement qui, dans une première position correspondant à une pression de pilotage faible ou égale à zéro, met sous pression la première chambre d'actionnement (20) et, dans une seconde position correspondant à une pression de pilotage élevée, vide la première chambre d'actionnement (20) et délivre la pression de pilotage à la seconde soupape de réglage (5) en actionnant celle-ci de telle manière que la seconde chambre d'actionnement (34) reçoit une pression hydraulique d'actionnement.

**24.** Dispositif selon la revendication 22, **caractérisé** en ce qu'un distributeur de lubrification (6), formé par un distributeur 3/2, est raccordé au circuit hydraulique principal (conduit principal 2) et à un raccord de vidange (chambre annulaire 31c) de la seconde soupape de réglage (5) qui, dans sa première position, évacue le fluide de la seconde chambre d'actionnement (34), de sorte que le distributeur de lubrification (6) délivre à la boîte de vitesses, pour la lubrifier, du fluide provenant soit du système hydraulique principal, soit du raccord de vidange (chambre annulaire 31c).

**25.** Dispositif selon la revendication 24, **caractérisé** en ce que le distributeur de lubrification (6) est piloté par la pression du conduit de pilotage (9).

**26.** Dispositif selon la revendication 24, **caractérisé** en ce que le distributeur de lubrification (6) est piloté par la pression du raccord de vidange (chambre annulaire 31c) de la seconde soupape de réglage (5).

**27.** Dispositif selon la revendication 21, **caractérisé** en ce qu'une soupape électromagnétique de commande de pression (7) est disposée sur le conduit de pilotage (9).

**28.** Dispositif selon la revendication 21, **caractérisé** en ce qu'un amortisseur hydraulique (10) est disposé sur le conduit de pilotage (9).

**29.** Dispositif pour la mise en oeuvre du procédé selon la revendication 1 ou 2, **caractérisé** en ce que, pour mesurer les différences de régime $\Delta n$ ou les différences de vitesse de rotation $\Delta\omega$, il est prévu un disque à fentes (55) multipolaire ou une roue dentée, coopérant avec un capteur de rotation (56), et en ce qu'un étage suivant de traitement des surfaces d'impulsions (conformateur d'impulsions 57 et monostable 58) produit des surfaces d'impulsions exactement égales à partir desquelles, dans un filtre passe-bande suivant (59) l'ondulation résiduelle et des données limites sélectives du signal de vitesse de rotation sont déterminées et finalement, dans un étage suivant (60), une tension de sortie ayant un rapport direct avec la valeur effective est produite.

FIG. 1

FIG.2

FIG. 3

FIG.4

FIG.7

FIG.5

FIG. 6